(19) Europäisches Patentamt
European Patent Office
Office européen des brevets

(11) Numéro de publication : **0 479 860 B1**

(12) # FASCICULE DE BREVET EUROPEEN

(45) Date de publication du fascicule du brevet : **01.09.93 Bulletin 93/35**

(51) Int. Cl.$^5$ : **C07F 9/6571,** C07F 9/6584, C07F 9/50, C07F 9/53, C07F 9/46

(21) Numéro de dépôt : **90910138.8**

(22) Date de dépôt : **26.06.90**

(86) Numéro de dépôt international : **PCT/FR90/00466**

(87) Numéro de publication internationale : **WO 91/00286 10.01.91 Gazette 91/02**

(54) **COMPOSES ORGANIQUES DU PHOSPHORE COMPLEXES PAR DU BORE.**

(30) Priorité : **30.06.89 FR 8908763**

(43) Date de publication de la demande : **15.04.92 Bulletin 92/16**

(45) Mention de la délivrance du brevet : **01.09.93 Bulletin 93/35**

(84) Etats contractants désignés : **AT BE CH DE DK ES FR GB IT LI LU NL SE**

(56) Documents cités :
**FR-A- 2 562 543**
**Journal of the American Chemical Society vol. 99, No 8, 13 April 1977 L J Vande Griend et al.: "Structure-basicity relations among phosphate and phosphite esters. CNDO/2 and protonation studies" pages 2459-2463; see the whole article**

(56) Documents cités :
**Phosphorus, vol. 3, 1973, Gordon and Breach Science Publishers Ltd.,(GB), D W White et al.: "Axial Versus equatorial phosphorus lone pair basicity in six-membered ring phosphites", pages 15-17. See the whole article**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **JUGE, Sylvain**
**15, sentier de Chateaufort**
**F-91400 Orsay (FR)**
Inventeur : **GENET, Jean-Pierre**
**70, rue Estienne-Dorves**
**F-91370 Verrières-le-Buisson (FR)**

(74) Mandataire : **Bertrand, Didier**
**c/o S.A. Fedit-Loriot 38, avenue Hoche**
**F-75008 Paris (FR)**

**EP 0 479 860 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne une série de nouveaux composés organiques du phosphore, complexés par du bore sur leur atome de P, et un procédé de leur préparation. Plus particulièrement, elle se rapporte à des hétérophosphacycloalcanes, notamment dioxaphospholanes et oxazaphospholidines, dont l'atome de phosphore forme un complexe avec un borane. Cette invention comprend également l'application des nouveaux complexes à la préparation de divers dérivés organiques du phosphore, notamment phosphinites, phosphines, diphosphinites, diphosphines et similaires, complexés au bore, utiles industriellement. Elle est particulièrement avantageuse pour la préparation de tels composés à chiralité stable, présentant un excès énantiomérique (e.e.) élevé.

Il est connu que des composés, tels que phosphinites, phosphines , amino-phosphines, oxydes de phosphines, etc. et leurs dicomposés, servent à la synthèse de diverses substances organophosphorées et sont utilisés dans la préparation de catalyseurs comprenant des ligands de P avec groupes organiques, optiquement actifs. Des phosphines servent avantageusement dans des systèmes catalytiques, par exemple à l'hydrogénation en milieu homogène. De telles hydrogénations asymétriques ont été décrites dans les cas de groupes C=C et ceux de diverses cétones, notamment par R. NOYORI et coll. dans J. Am. Chem. soc. 1987, 109, p. 5856-5858, ainsi que par M. KITAMURA et coll. dans le même journal, en 1988, 110, p. 629-631. On emploie également des phosphines à la préparation de catalyseurs à base de métaux pour des réactions d'hydroformylation et de polymérisation, ou bien dans l'isomérisation d'hydrocarbures insaturés avec des complexes de ruthénium et de phosphore. L'intérêt de phosphine-boranes, pour la préparation de certains catalyseurs très utiles dans l'hydrogénation asymétrique, a été signalé par TSUNEO INAMOTO et coll. dans J. Am. Chem. Soc. 1985, 107 p.5301-5303.

Dans les articles de J.Am.Chem:Soc., vol. 99, n° 8, pages 2459-2463 et de Phsophorus, Vol. 3, 1973, pages 15-17, on a étudié la basicité des esters phosphoreux et phosphoriques, c'est-à-dire de composés ayant 3 ou 4 atomes d'oxygène. On y a signalé des complexes correspondants, portant un ligand $BH_3$ sur le phosphore. Ces considérations sur la basicité ne permettaient pas de prévoir que de tels complexes boranes pourraient servir à la préparation de phosphinites ou de phosphines, notamment pour catalyseurs. Cela était d'autant plus difficile à imaginer que cet art antérieur porte sur 3 ou 4 atomes d'oxygène par P, alors qu'il s'agit de 1 ou, au maximum, 20 selon la présente invention. Il est à noter également que l'article dans "Phosphorus" dès le début, (page 15), lignes 9-10, signale la chute de la stabilité du complexe avec $BH_3$, lorsque la molécule est cyclique, alors qu'une parfaite stabilité est constatée pour tous les composés à 1 ou 20 atomes d'oxygène liés à P selon la présente demande.

Les nouveaux composés, suivant l'invention, répondent à la formule générale :

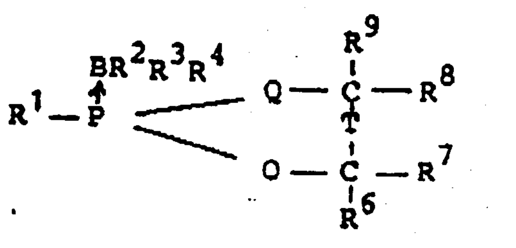

... (1)

dans laquelle Q désigne un atome d'oxygène ou un groupe azoté $-N-R^5$
où $R^5$ est H, un alkyle de $C_1$ à $C_{12}$ ou un aryle en $C_6$ à $C_{10}$; $R^1$ est un atome d'hydrogène, un halogène, un groupe amino, un alkyle ou alkényle en $C_1$ à $C_{18}$, un aryle en $C_6$ à $C_{10}$, ou un groupe cycloaliphatique ; $R^1$ peut porter un second groupe phosphoré, similaire à

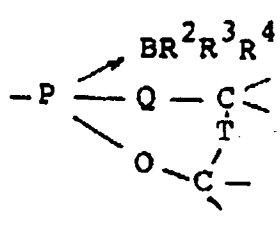

$R^2$,$R^3$ et $R^4$, semblables ou différents, sont des H, des alkyles en $C_1$ à $C_6$ ou/et des aryles en $C_6$ à $C_{10}$ ; $R^6$ à $R^9$, semblables ou différents sont des H, des halogènes, des OH, des radicaux aliphatiques, cycloaliphatiques

aryliques, ou/et alkylaryliques ; T désigne une simple liaison ou bien un alkylène en $C_1$ à $C_4$ pouvant faire partie d'un cycle arylique ou cycloaliphatique.

Lorsqu'un ou plusieurs des $R^6$ à $R^9$ sont des groupes hydrocarbonés, il est préférable qu'ils soient des alkyles ou alkényles en $C_1$ à $C_{12}$, des aryles, éventuellement substitués, en $C_6$ à $C_{18}$, des cyclopentyles ou/et cyclohexyles.

On illustre ci-après le cas où $R^1$ porte un second groupe phosphoré, auquel cas il est désigné par $R^{10}$ qui est un alcényle ou alkoxy en $C_1$ à $C_{12}$, un arylène en $C_6$ à $C_{18}$ ou un groupe aminé. La formule (2) représente un tel dicomposé.

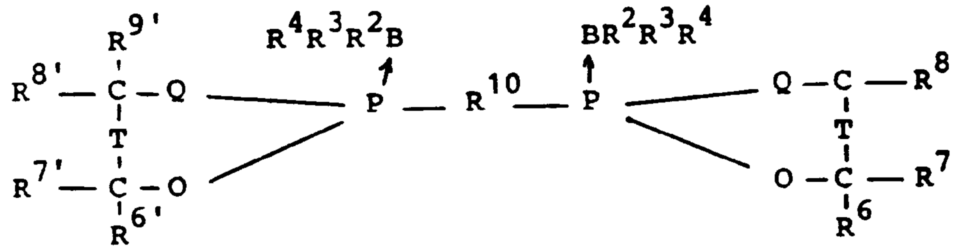
..(2)

La définition générale des groupes $R^{6'}$ à $R^{9'}$ est la même que pour les $R^6$ à $R^9$, mais ils peuvent différer individuellement de ces derniers.

Lorsque Q est un atome d'oxygène, les composés (1) et (2) sont des dérivés de dioxa-phospholane- 1,3,2 ; si Q est un groupe azoté $-\overset{|}{N}-R^5$, ces composés sont des dérivés de l'oxazaphospholidine-1,3,2 ; dans les deux cas, la présence de borane complexant sur le phosphore procure des avantages remarquables, notamment en ce que les corps (1) ou (2) peuvent être aisément transformés en des complexes boraniques stables de phosphines, de phosphinites, ou de leurs dérivés, fort utiles comme catalyseurs de diverses réactions, permettant l'obtention sélective de composés doués d'une chiralité voulue.

Les produits les plus simples, selon formules (1) et (2), le plus couramment employés, suivant l'invention, ont, en tant que $R^1$, $R^6$ à $R^9$ ou $R^{6'}$ à $R^{9'}$, des alkyles en $C_1$ à $C_4$ ou/et des phényles ou méthylphényles, $R^{10}$ étant un alkylène en $C_1$ à $C_4$ ou un phénylène, et $R^2$ à $R^4$ étant des H, tandis que T est une simple liaison ou bien $-CH_2-$ ; est également d'emploi pratique le composé (1) dans lequel $R^1$ est un -N=dialkyle dont l'alkyle possède 1 à 3 atomes de C, et un composé (2) dans lequel $R^{10}$ est

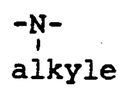

où l'alkyle est en $C_1$ à $C_3$.

Le procédé suivant l'invention est caractérisé en ce que l'on fait agir, au sein d'un solvant, un composé du bore $BR^2R^3R^4$, dont la définition est donnée plus haut, avec unhétéro-phospha-cycloalcane à une température de -20° à +60°C et de préférence entre 0° et 40°C.

En tant qu'hétéro-phospha-cycloalcanes conviennent particulièrement des dioxaphospholanes et des oxazaphospholidines représentées par la formule

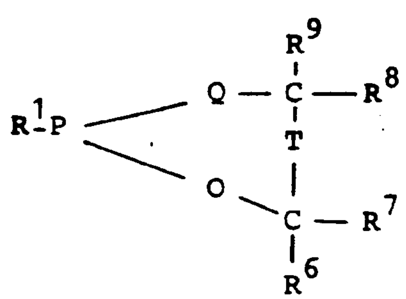
... (3)

dans laquelle les symboles Q, $R^1$,T et $R^6$ à $R^9$ ont la même signification que dans la formule (1) décrite plus haut. De même peut-on employer le dicomposé correspondant, analogue à celui de la formule (2), sans

$BR^2R^3R^4$.

Les proportions préférées sont de l'ordre de 1 à 2 moles de borane $BR^2R^3R^4$ par mole de composé (3).

Divers solvants appropriés peuvent être utilisés, notamment les tétrahydrofurane, benzène, toluène, etc., selon la solubilité des produits employés. La concentration en hétéro-phospha-cycloalcane peut varier suivant la nature de celui-ci, mais elle est de préférence d'environ 0,1 à 1 M et surtout 0,3 à 0,7 M.

Un bon mode opératoire comprend l'agitation du mélange réactionnel pendant généralement 1 à 10 heures, le plus souvent 2 à 6 heures,suivie d'un barbotage de gaz inerte, notamment d'azote, et de l'évaporation du solvant. Selon les cas, le rendement en complexe au borane peut dépasser 90%, variant en général entre 35 et 95%. Cette facilité d'obtention des complexes suivant l'invention constitue un fait inattendu, puisque - d'après la technique antérieure (Tsuneo INAMOTO cité plus haut) - il fallait travailler en présence d'un réducteur et d'un catalyseur de $CeCl_3$ pour former un complexe boranique de phosphine. Il est surprenant de pouvoir, suivant l'invention, former de tels complexes aisément, sans réducteur ni catalyseur, à condition de partir d'un hétéro-phospha-cycloalcane au lieu d'une phosphine ou d'un phosphinite. Or, comme les complexes de borane, suivant l'invention, peuvent être facilement transformés en les complexes correspondants de phosphines, phosphinites ou de leurs dérivés, l'invention procure un moyen imprévu d'obtention de ces différents complexes.

Ainsi, la présente invention comprend-elle les applications des nouveaux composés (1) et (2) à la préparation de divers phosphinites et phosphines complexés par des boranes ; elle s'applique en particulier à la production de complexes optiquement actifs de phosphinites, phosphines, amino-phosphines, oxydes de phosphines, diphosphinites, diphosphines et dioxydes de phosphines. Un de ses avantages importants est que la chiralité du composé (1) ou (2) de départ est entièrement conservée au cours de ces applications, ce qui permet d'obtenir l'activité optique voulue sur le produit final.

Une première application des complexes (1) et (2) est leur transformation en phosphinites par l'ouverture du cycle alcanique au moyen d'un composé métallo-organique $R^{11}$ M, $R^{11}$ étant un alkyle ou alkényle, généralement en $C_1$ à $C_{12}$, un aryle en $C_6$ à $C_{10}$ ou un cycloalkyle, tandis que n désigne la valence du métal M qui peut être Na, K, Li, Ca, Mg, Zn, Al ou autre, donnant facilement des dérivés organométalliques. Le composé formé est ensuite hydrolysé ; l'ensemble des réactions peut être schématisé par :

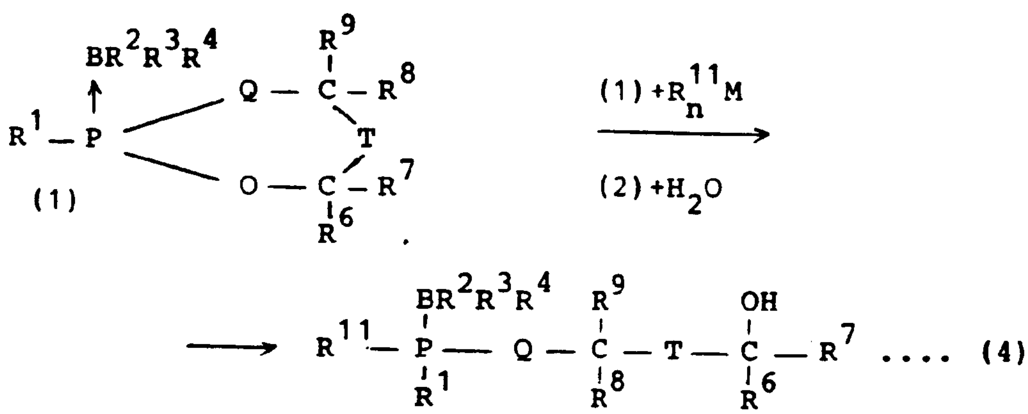


(1)

.... (4)

L'ouverture du cycle se fait de préférence entre -100° et +25°C.

De façon analogue, on obtient le dicomposé correspondant à (4) en partant du dicomposé suivant l'invention (2) et une quantité double de $R^{11}_n$M.

A partir du composé (4) ou de son dicomposé, pouvant présenter l'activité optique voulue, on peut passer à différents dérivés intéressants pour l'industrie par des réactions, telles que, par exemple coupure acide, alcoolyse, amination, etc.

A titre d'exemple, on peut noter le passage du corps (4), dont Q est

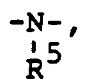

par alcoolyse $R^{12}OH$ acide, à :

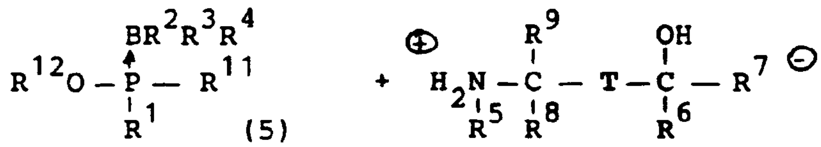

(5)

($R^{12}$ étant un alkyle, de préférence en $C_1$ à $C_{12}$, ou un aryle, plus particulièrement en $C_6$ à $C_{10}$).

Ainsi, l'inducteur asymétrique est récupéré sans perte de chiralité. Le phosphinite (5) peut d'ailleurs être transformé en la phosphine-borane correspondante (6) par l'action d'un organométallique $MR^{13}$ :

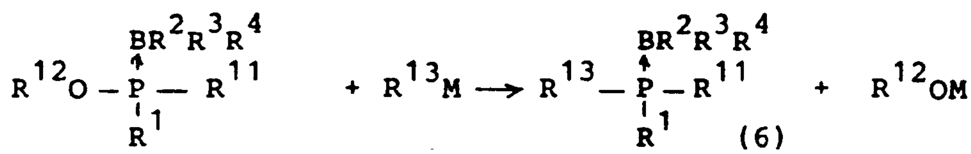

(6)

Cela montre une des nombreuses possibilités qu'offrent les nouveaux complexes (1) et (2) suivant l'invention.

Une autre application encore consiste à traiter le produit intermédiaire (4) par un hydracide HX, ce qui donne:

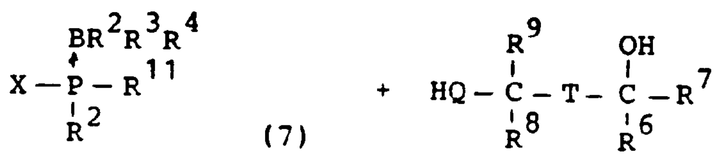

(7)

L'activité optique de l'halogéno-phosphine (7) est alors fonction de la concentration de l'acide HX utilisé. L'inducteur asymétrique est récupéré sans perte de chiralité.

Une importante application de l'invention réside dans la préparation de phosphines chirales à forte pureté optique, dont l' excès énantiomérique (ee) peut approcher 100%. L'utilité de telles phosphines a incité de nombreux chercheurs à la conception de différentes méthodes de préparation. Ainsi, par exemple, trouve-t'on des publications comme celles de : K. MISLOW - J.A.C.S 4842 (1968) et 7009 (1969) ; M. MIKOLAJCZYK - Pure and Appl,. Chem. 52, 959 (1980) ; W. CHODKIEWICZ - J. Organomet. Chem. 273 (1984) - C 55 ; S. JUGE, BREVETS FR - 2518 100 et 2 537 143; T. KOIZUMI - Tetrahedron Letters 22, p. 571 (1981) ; W. J. RICHTER J. Organomet. Chem. 301, 289 (1986) ; T. INAMOTO - Tetrahedr. Letters 26, p. 783 (1985) et J. of Synth. Org. Chem. Japan 592 ; SUGA et - Chem. Letters p. 913 (1983) et p. 1915 (1987). Au départ d une dichlorophosphine, notamment de Ph-$PCl_2$, ou d'un oxyde de phosphine, ces méthodes connues présentent en général divers inconvénients, dont les plus fréquents sont la nécessité d'une séparation de diastéréoisomères, l'obligation de désoxygéner l'oxyde de phosphine, la limitation dans la nature des groupes hydrocarbonés sur le phosphore, rendements souvent faibles et difficulté d'obtention d'une pureté optique suffisante.

Or, l'utilisation d'hétéro-phospha-cyclanes complexés avec un borane, suivant l'invention, apporte une série d'avantages inattendus ; les rendements des opérations atteignent 70 à 100% et les excès énantiomériques ee approchent ou égalent 100% ; la stabilité remarquable des complexes boranes rend possible la conduite de chaque étape de la préparation, sans séparation préalable du produit formé dans l'étape précédente ; cela facilite considérablement le travail et améliore les rendements. Il est à noter, d'autre part, que les complexes boranes d'hétéro-phospha-cycloalcanes utilisés s'obtiennent très aisément à partir de dihalogéno-phosphines courantes et d'amines secondaires, puis action d'un amino-alcool, ou d'un diol, qui est récupéré quantitativement au cours de la préparation et peut, par conséquent, reservir dans une nouvelle opération.

Les applications suivant l'invention sont caractérisées en premier lieu par l'ouverture du cycle d'un borane hétéro-phospha-cycloalcane (1) ou (2), sous l'action d'un composé organo-métallique, suivie d'hydrolyse, ce qui conduit au produit intermédiaire (4), mentionné plus haut (Q pouvant être 0 ou $-\underset{|}{N}-R^5$) ; celui-ci subit une alcoolyse acide en phosphinite (5),qui peut être utile lui-même , notamment comme catalyseur, ou bien servir de matière de départ à la préparation de phosphine sous l'effet d'un composé organo-métallique. Mais, comme l'alcoolyse du produit (4) libère en même temps un diol ou un amino-alcool :

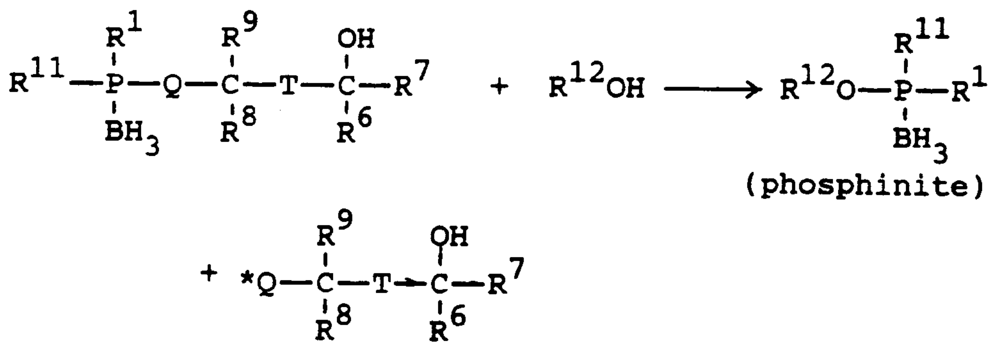

(phosphinite)

(diol ou amino-alcool selon que *Q est $-NH_2$ ou -OH)

ce dernier peut être récupéré pour la préparation de l'hétéro-phospha-cycloalcane borane (1) ou (2) initial.

Ainsi, le procédé de l'invention comprend-il une forme d'exécution qui consiste à :

(1) préparer un hétéro-phospha cycloalcane par l'action d'un diol ou d'un amino-alcool sur une diamino phosphine, en présence d'un borane;

(2) ouvrir le cycle de cet hétérocomposé au moyen d'un organo-métallique ;

(3) soumettre à l'alcoolyse acide le produit intermédiaire, ainsi obtenu, et

(4) recycler dans l'opération (1) le diol ou l'aminoalcool formé dans l'opération 3.

Alors qu'avec des composés non complexés,ces opérations sont assez difficiles à réaliser, et on n'arrive en général qu'à des mauvais rendements, elles sont aisées lorsque les composés concernés se trouvent sous la forme de complexe borane.

Selon la nature des corps mis en jeu et le but recherché, on a le choix entre différents diols et amino-alcools par exemple : éthylène glycol ; propane-diol-1,2 ; propane-diol-1,3 ; butane-diol-1,2 ou 1,3, ou bien 2,3 ; phényl-1 butane-diol-2,4 ; anisyl-2 pentane diol-3,4 ; diméthyl-3,5 heptane diol-2,5 ; naphtyl-1 pentane diol-2,3 ; diphényl-1,1 propane diol-1,2 ; diméthyl-1,4 cyclohexane diol-2,4 ; cyclohexyl-1 butane-diol-2,3 ; cyclopentyl-2 hexane-diol-3,4 ; α-toluyl-1 butane-diol-2,3 et autres. Les amino-alcools peuvent être tels que par exemple : phényl-1 hydroxy-1 méthylamino-2 propane (éphédrine) ; amino-1 propanol-2 ; amino-2 butanol-1 ; phényl-1 amino-2 butanol-3 ; propylamino-2 butanol-1 ; α-hydroxyméthyl pyrrolidine (prolinol) etc.

Comme indiqué plus haut, des dérivés organiques de différents métaux peuvent être utilisés ; cependant ceux des métaux alcalins, et surtout du lithium, conviennent particulièrement bien.

En tant que solvants, pour le milieu réactionnel, conviennent les divers solvants organiques courants, comme tétrahydrofuranne, dioxane, éthers éthylique, propylique, isopropylique, butylique, isobutylique, esters,hydrocarbures aliphatiques et aromatiques, et leurs différents mélanges.

Etant donné l'intérêt de cet aspect de l'invention, on montre ci-après l'enchaînement des réactions conduisant à une phosphine chirale à partir de $Ph-PCl_2$ pris comme matière première. Il est entendu que les composés particuliers (A) à (I), indiqués ici, sont seulement des exemples non limitatifs, le procédé pouvant être réalisés avec les différents boranes -hétéro-phospha-cycloalcanes définis au début de la présente description.

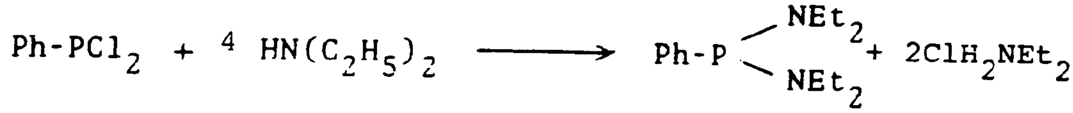

(A) (B) (C)

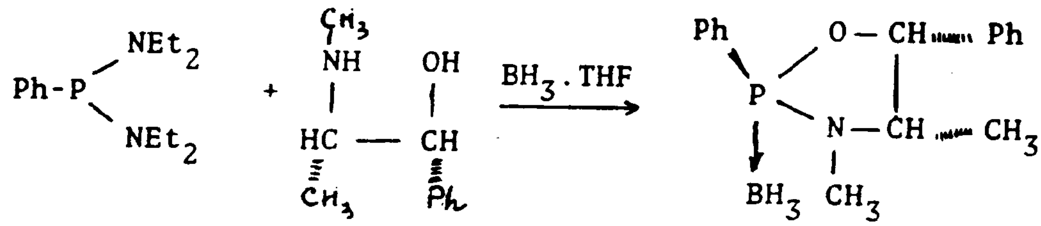


(C) (D) éphédrine (E)

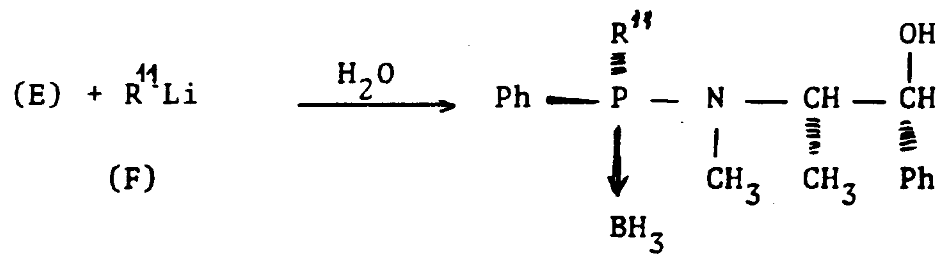


(F) (G)

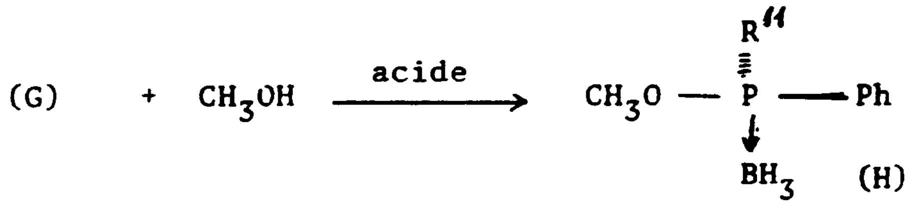


(H)

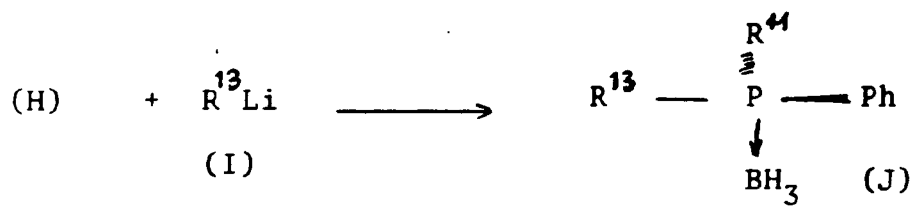

(I) (J)

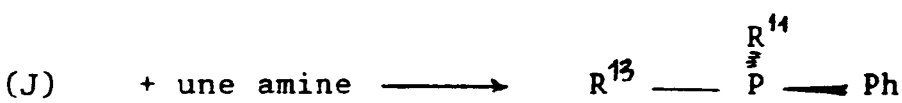


(K)

Les choses se passent d'une façon analogue, si l'on part d'un complexe borane de di-(hétéro-phospha cyclane), selon formule (2) donnée plus haut, au lieu du mono-composé (E) du schéma ci-dessus.On aboutit alors, par exemple, à une phosphine du type

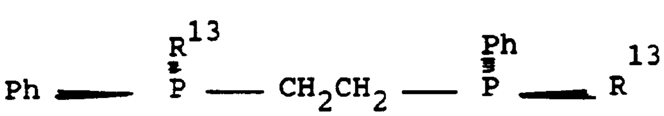 (K')

Il est à noter que, lorsqu'on a préparé une certaine quantité de phosphinite (H), on peut s'en servir pour produire toutes phosphines chirales désirées, en employant des $R^{13}Li$ (I) dont le radical $R^{13}$ peut varier largement : il peut être par exemple un méthyle, éthyle, propyle, isopropyle, butyle, isobutyle, hexyle, décyle, dodécyle, phényle, tolyle, xylyle, cuményle, mésityle, benzyle, phénéthyle, cyclopentyle, cyclohexyle, naphtyle, etc. Un large choix est de même possible en ce qui concerne le radical $R^{11}$ dans l'organo-métallique (F) utilisé à l'ouverture du cycle du complexe borane (E) pour donner l'intermédiaire (G).

En outre, l'alcoolyse de (G) en le phosphinite (H) libère quantitativement, sans perte d'activité optique, l'aminoalcool (D) utilisé, en particulier l'éphédrine, qui a servi à l'obtention du complexe de départ (E). Cet aminoalcool chiral peut donc être avantageusement recyclé, comme signalé plus haut.

L'invention permet l'obtention à volonté d'isomères R ou S de la phosphine désirée ; on peut pour cela inverser l'ordre d'introduction des groupements $R^{11}$ et $R^{13}$, c'est-à-dire utiliser(I) à la place de (F) et réciproquement, ou bien faire réagir en (D) un aminoalcool (+) ou (-).

Il est important de noter le comportement exceptionnel des complexes boranes suivant l'invention. En effet, lorsqu'on effectue l'alcoolyse acide suivant la ligne (G) + $CH_3OH \rightarrow$ (H) du schéma donné plus haut, avec un complexe du $W(CO)_5$ on obtient surtout de l'acide phosphineux et du phosphinite :

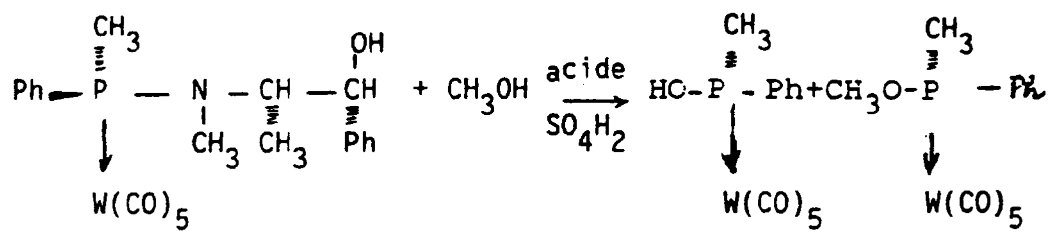


Rendement : 80% ....... 20%

ee = 54%

La transformation de ces complexes en phosphine est difficile. Par contre, l'opération analogue avec le complexe borane (G) donne :

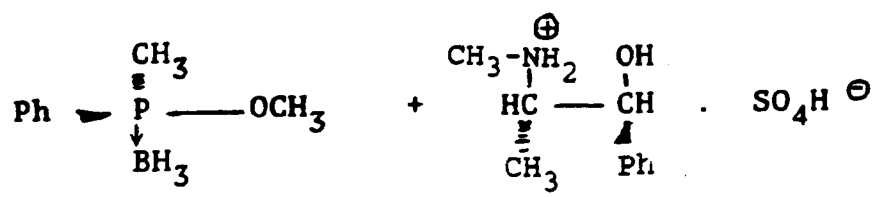

(H) (D) éphédrine

Rendement : 95% ......... 95%

ee = 96%

L'invention est illustrée non limitativement par les exemples qui suivent. Les différents hétéro-phosphacycloalcanes, qui ont servi à la préparation des complexes suivant l'invention, ont été obtenus à la manière connue, notamment par les publications de brevets français n°2 562 543 et 2 564 842, ainsi que par les thèses de doctorat (université d'Orsay), de Y. LEGRAS du 5.6.84 et celle de S. JUGE du 16.10.84.

EXAMPLE 1

Préparation de (-)(diméthyl-2,5 diphényl-4,4 dioxaphospholane-1,3,2)-borane (2R,5S)

Dans un ballon équipé d'un agitateur magnétique et d'une arrivée d'azote, on introduit 200 ml d'une solution 0,5 M de diméthyl-2,5 diphényl-4,4 dioxaphospholane-1,3,2 dans du tétrahydrofurane (THF). A cette solution on ajoute lentement, sous agitation, à 20°C, 100 ml de solution 1M de $BH_3$ dans THF. Après 4 heures d'agitation, on fait barboter de l'azote, pendant 1 heure, dans le mélange formé. Le solvant est alors évaporé. Le résidu obtenu est chromatographié sur silice, avec du toluène comme éluant. Le produit non cristallisé, incolore, présente les caractéristiques suivantes.

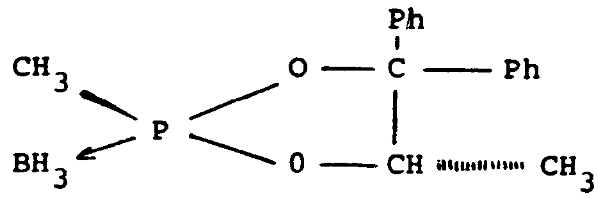

$/\alpha/_D$ = -207° (c = 2 dans $CHCl_3$)

RMN$^1$H ($CDCl_3$)δ: = 1,18 (3,d,J=6,5); 1,26 (3,d,J=7,5); 5,48 (1,m,$J_1$=6,5, $J_2$=8,5) ; 7,2-7,35 (5,m); 7,35-7,5 - 5,m).

RMN$^{13}$C($CDCl_3$)δ: =17,9 (d,J=27); 19 (d,J=4,5) ; 81,08 (d, J=5).

RMN$^{31}$P ($CDCl_3$)δ: =+172,4 ppm ; IR (pur) ($cm^{-1}$)=2400; 860-1000.

| Analyse $C_{16}H_{20}BO_2P$ | % | C | H |
|---|---|---|---|
| | calculé | 71,1 | 7,4 |
| | trouvé | 69,9 | 7,4 |

Masse 226(5) : 194 pic de base.

EXEMPLE 2

Préparation de (diphényl-4,4' éthyl-2-méthyl-5 dioxaphospholane-1,3,2) borane (2R, 5S)

Dans le mode opératoire de l'exemple 1, le dioxaphospholane employé a été remplacé par la même proportion de diphényl-4,4' éthyl-2 méthyl-5 dioxaphospholane-1,3,2.

Voici les caractéristiques du produit blanc, cristallin, obtenu.

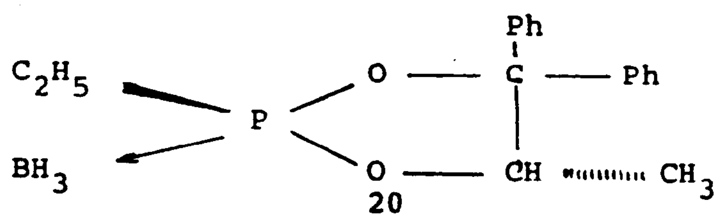

20

$P_f$ = 110-111°C, $/\alpha/_D^{20}$ =-226° (c=1,2 dans $CHCl_3$)

RMN$^1$H ($CDCl_3$) : o = 1,02 (3,d.t. $J_1$=8, $J_2$=18); 1,19 (3,d, J=6) ; 1,46 (2,m) ; 5,34 (1,P, $J_1$=6 $J_2$=7) ; 7,2-7,35 (5,m) ; 7,35-7,5 (5,m).

RMN$^{13}$C ($CDCl_3$): δ =6,13 ; 19,2 (d, J=5) ; 24,8 (d, J=27); 81,3 (d, J=5,5) ; 91,9 (d).

RMN$^{31}$P ($CDCl_3$): δ = +177,5 ppm (q, $J_{PB}$=88).

IR (KBr) : ($cm^{-1}$) = 2400-2430 ; 975.

| Analyse : $C_{17}H_{20}BO_2P$ | % | C | H |
|---|---|---|---|
| | calculé | 68,0 | 7,3 |
| | trouvé | 68,1 | 7,4 |

Masse 242 (1) : 194 pic de base;179(25);165(25);115(43).

EXEMPLE 3

Préparation de (-)(méthyl-5 triphényl-2,4,4 dioxaphospholane-1,3,2) borane (2R,5S)

Même technique que plus haut, le dioxaphospholane utilisé étant le (-)méthyl-5 triphényl-2,4,4 dioxaphospholane-1,3,2. On obtient le complexe

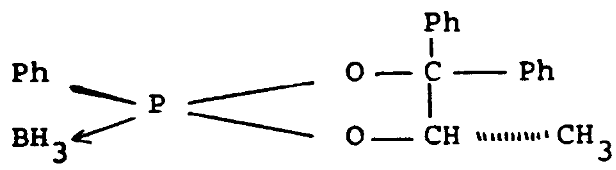

sous la forme d'un produit blanc, cristallin, aux propriétés suivantes.
$P_f$ = 158°C ; $/\alpha/D_D^{20}$ = -104° (c = 6 dans $CHCl_3$)
RMN$^1$H ($CDCl_3$):δ = 1,24 (3,d, J=6,5) ; 5,12 (1,d.q. $J_1$=4, $J_2$=6,5) ; 7,2-7,5 (15,m).
RMN$^{13}$ ($CDCl_3$):δ = 18,8 (d, J=8) ; 80,7 (d, J=5,5).
RMN$^{31}$P ($CDCl_3$):δ = +154,7 ppm (q. $J_{PB}$=87).
IR (KBr): ($cm^{-1}$) = 2400-2410; 1115-920, 1650-1270.

| Analyse $C_{21}H_{22}BO_2P$ | % | C | H |
|---|---|---|---|
| | calculé | 72,4 | 6,3 |
| | trouvé | 72,3 | 6,2 |

EXEMPLE 4

Préparation de (diméthyl-3,4 diphényl-2,5 oxazaphospholidine-1,3,2) borane (2R, 4S, 5R)

Le mode opératoire des exemples précédents est appliqué à du diméthyl-3,4 diphényl-2,5 oxazaphospholidine-1,3,2. On obtient , avec un rendement de 90%, un produit blanc, cristallin, fondant à 110°C, de formule

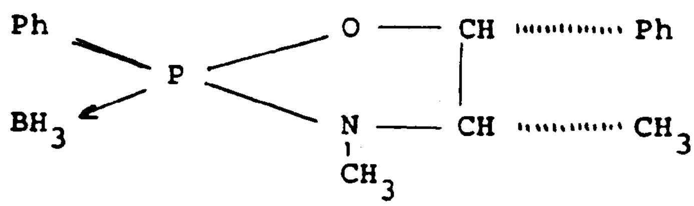

CCM silice-toluène : Rp = 0,7

| Analyse $C_{16}H_{21}BNOP$ | % | C | H | N |
|---|---|---|---|---|
| | calculé | 67,3 | 7,4 | 4,9 |
| | trouvé | 67,5 | 7.5 | 4.9 |

IR(KBr) : 2340-2360-2420 $cm^{-1}$ 1205-1180-1120-960 $cm^{-1}$
Masse : 272 (45) 118(98) 56(51) 214 (18) 108(27) 165 (pic de base) 91(31)
RMN$^{31}$P ($CDCl_3$): δ = +134,2 (q,$J_{PB}$=80)
RMN$^1$H ($CDCl_3$): δ = 0,83(3,d, J=8)
δ= 2,7 (3,d, J=11)
δ = 3,62 (1,m)
δ = 9,65(1,d.d, $J_1$=8, $J_2$=3)
δ= 7,3-8 (10,m)
RMN$^{13}$C ($CDCl_3$): δ = 13,5
δ= 29,4 (d, J=9)
δ= 59
δ= 84,1 (d, J=9).
$/\alpha/_D^{20}$ = + 1,74° (c = 4, $CHCl_3$)

EXEMPLE 5

Préparation de (phényl-2 pinane-4,5 dioxaphospholane-1,3,2)-borane

On procède comme dans les exemples précédents, l'hétérophospha-cycloalcane choisi étant le phényl-2 pinane-4,5 dioxaphospholane-1,3,2.

Le complexe obtenu :

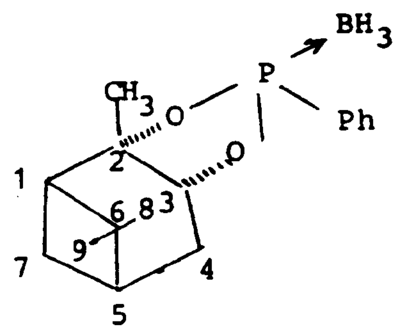

présente les caractéristiques suivantes.

RMN$^{31}$P ($CDCl_3$) + 152,7 ppm.

RMN$^{1}$H ($CDCl_3$) $\delta$ = 0,8 2,5 ppm (massif-18H) dont 3 singulets à 0,85, 1,25 et 1,35 ppm d'intensité 3H chacun ; 4,5-4,75 (m, 1H) ; 7,2-7,9 (m, 5H)

IR (pur) : $\bar{\nu}$ $cm^{-1}$ = 2400 ; 1520 ; 1460 ; 1380.

EXEMPLE 6

Application du produit de l'exemple 3 à la préparation de phosphinite

Dans un bicol muni d'un réfrigérant, on introduit 3 ml de THF anhydre, tenant en solution 0,35 g, soit 1 mmole de complexe préparé suivant l'exemple 3 ; sous une atmosphère d'azote, à -78°C, on ajoute 1 mmole de $CH_3Li$, c'est-à-dire 0,022 g, sous la forme de 0,625 ml d'une solution 1,6 M de $CH_3Li$ dans du THF anhydre, le tout étant agité magnétiquement. Après 1 heure, on ajoute au mélange réactionnel 0,1 ml d'eau et l'on continue à agiter durant 1 heure, cette fois-ci à la température ambiante. Après ce temps, on ajoute 25 ml de $CH_2Cl_2$ et le mélange est séché sur du $Na_2SO_4$. Après filtration sur "Millipore" (marque de fabrique) , le solvant est évaporé et le résidu est chromatographié sur plaque de silice de 20x20cm avec élution au toluène.

Une seconde série d'opérations similaires a été effectuée à la seule différence près que la réaction avec $CH_3Li$ avait lieu à -100° au lieu de -78°C.

Dans les deux cas, on a obtenu les deux isomères suivants, mais en proportions différentes.

B

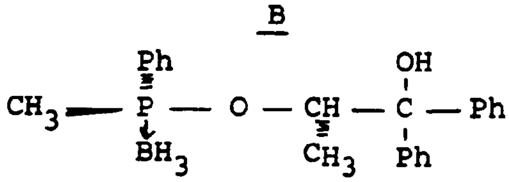

A

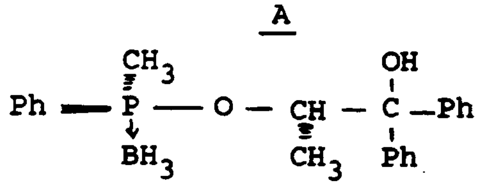

Les proportions relatives de ces deux isomères formés, selon que la réaction entre le complexe de départ et le $CH_3Li$ a eu lieu à - 78°C ou à -100°C, sont :

| | A | B | |
|---|---|---|---|
| -78°C ........ | 68% | 32% | Séparables par recristallisa- |
| -100°C ....... | 98,3% | 1,7% | tion dans du cyclohexane |

Il est donc possible de régler,par la température ,la quantité désirée de composé A ou B.

Ces corps, cristallisés, blancs, présentent les propriétés suivantes :

| | A | B |
|---|---|---|
| Température de fusion | 143°C | 163°C |
| $/\alpha/_D^{20}$ | -3° | -5,9° |
| | (c=4,5/$CHCl_3$) | (c=1,5/$CHCl_3$) |

Ils sont utiles en tant que catalyseurs d'hydrogénation de composés carbonylés.

EXEMPLE 7

Application du produit de l'exemple 3 après une transformation selon exemple 6

L'isomère phosphonite A, obtenu dans l'exemple 6, a été mis en suspension dans une solution aqueuse à 10% de NaOH, à raison de 0,1 g de cet isomère pour 10 ml de solution.

On a ajouté le minimum de THF pour dissoudre le produit ; le mélange fut porté à reflux pendant 48 heures. Le THF fut alors évaporé et la solution extraite avec du $CH_2Cl_2$ pour éliminer le diol formé. Après acidification, la solution aqueuse est soumise à l'extraction par du $CH_2Cl_2$, trois fois à raison de 50 ml. Les phases organiques sont regroupées, séchées et évaporées.

Ainsi, l'hydrolyse du complexe borane phosphinite formé dans l'exemple 6, a conduit aux composés

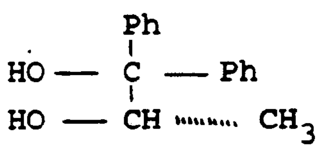

et

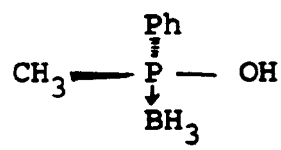

dont le premier (diol) fut éliminé au moyen de $CH_2Cl_2$, tandis que le second, méhyl phényl phosphinite borane, de Na, recueilli, servit de catalyseur d'hydrogénation intéressant. Ce composé présente les caractéristiques que voici.

IR : $\bar{V}_{OH}$ = 2500 ; 3500 $cm^{-1}$ ; $\bar{V}_{BH}$ = 2460 $cm^{-1}$ $\bar{V}$ = 1440 ; 1150 $cm^{-1}$.

RMN : $^1H$ (250 $MH_2$) ; $\delta$ =0,2-1,5 (m, 3H) $\delta$ =1,62 (d, 3H, H=1) ; 7,4-7,8(m, 5H) $^{31}P$ ($CDCl_3$) : $\delta$ = + 95,2 ppm

EXEMPLE 8

Application du complexe oxazaphospholidine borane obtenu suivant l'exemple 4

Par la technique de l'exemple 6, c'est-à-dire au moyen de $CH_3Li$ à -78°C, puis hydrolyse, on a converti la (diméthyl-3,4 diphényl-2,5 oxazaphospholidine-1,3,2) borane (2R, 4S, 5R) en le complexe correspondant d'aminophosphine

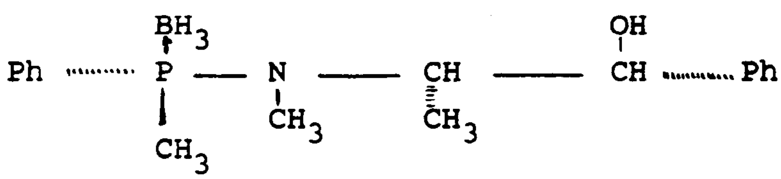

avec un rendement de 80%. Cristaux blancs. Ce corps fond à 108°C.

Analyse $C_{17}H_{25}BNOP$ :

| % | C | H | N |
|---|---|---|---|
| théorie | 67,8 | 8,3 | 4,6 |
| trouvé | 67,8 | 8,6 | 4,6 |

RMN$^{31}$P ($CDCl_3$) : δ= +67 ppm
$^1$H ($CDCl_3$) : δ= 1,20 (3,D, J=7)
δ= 4 (1,q,d, $J_1$=$J_2$=7, $J_{P-H}$=11)
δ=1,49 (3,d, J=9)
δ = 4,68 (1,d, J=7)
$^{13}$C ($CDCl_3$) : δ= 11,2 (d, $J_{PC}$=42)
δ= 58 (d, $J_{PC}$=8)

Ce composé peut être aisément transformé en méthyl phényl chlorophosphine borane, à partir de laquelle il est possible d'obtenir toute une série de phosphines différentes.

I- Un premier mode opératoire consiste à mettre 1 mmole d'amino-phosphine en solution dans 5 ml $CH_2Cl_2$ et à y faire barboter de l'HCl gazeux, sec, jusqu'à disparition du produit de départ blanc. Le mélange est filtré et le solvant est évaporé.
La méthyl phényl chlorophosphine borane

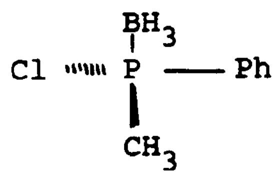

est une huile claire, qui cristallise à froid et peut être utilisée sans purification. Elle est obtenue avec un rendement de 95%. Quelques unes de ces caractéristiques :

$/\alpha/_D^{20}$= +0,85° (C=13, $CH_2Cl_2$)

IR(pur) : 2450, 1600, 1300, 1000, 905 $cm^{-1}$

RMN $^1$H ($CDCl_3$) : δ= 2,13 (3,d, J=8)
δ= 7,4 - 8,2 (5 m).

II- Dans un autre mode opératoire, le complexe d'amino-phosphine est dissous dans un minimum de toluène; la solution obtenue est mélangée avec une solution de HCl sec dans du toluène. Le précipité de chlorhydrate formé est éliminé par filtration. La solution de méthyl phényl chlorophosphine borane, dans le toluène , est utilisée telle quelle à la préparation de phosphines.

EXEMPLE 9

Préparation du complexe borane de méthyl phényl phosphinite de méthyle

On effectue la réaction de méthanolyse sur une aminophosphine isomère de celle de l'exemple 8 :

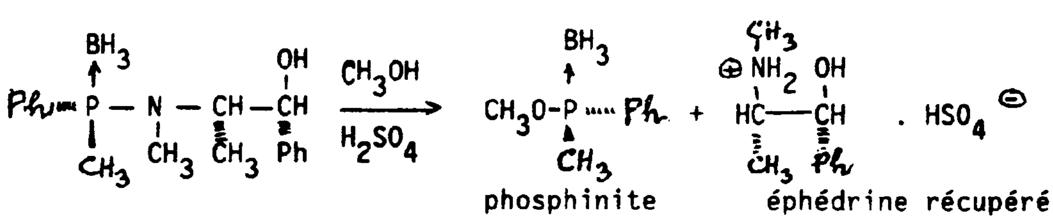


phosphinite éphédrine récupéré

Dans un ballon de 50 ml on place la solution de 2 mmoles de l'amino phosphine ci-dessus dans 16 ml de méthanol sec ; 0,2 g de $H_2SO_4$ concentré sont ajoutés à cette solution, sous agitation. Après 1 heure la réaction est arrêtée par l'addition de 50 ml d'eau.

Le méthanol est alors chassé par évaporation, et le résidu extrait par trois fois 20 ml de $CH_2Cl_2$. L'évaporation du solvant de l'extrait laissé du phosphinite liquide, bouillant à 90°C sous 1mmHg. Le rendement est de

90%
$/\alpha/_D^{20}$ = - 104° (C = S $CHCl_3$)

| Analyse : | | C | H | IR (pur): $V_{BH}$ 2350 $cm^{-1}$ |
|---|---|---|---|---|
| | Calculé | 57,14 | 8,37 | 1430,1400,1050 $cm^{-1}$ |
| | trouvé | 57,03 | 8,33 | |

RMN[1]H ($CDCl_3$) : δ =1,75 (3H, d, J = $10H_2$)
3,65 (3H, d, J = $13H_2$)
7,3-8,1 (5H,m)
Masse : M-1 (5%) 154(100%) 139(50%) 123(13%)

La phase aqueuse, issue de la décantation, est neutralisée avec une solution aqueuse de bicarbonate de Na à 10%; elle est extraite à l'éther ou au dichloréthane, ce qui permet de récupérer quantitativement l'éphédrine, sans perte d'activité optique.

EXEMPLES 10 à 12

Préparation de phosphines chirales, à partir du phosphinite de méthyle complexé au borane

La réaction peut être schématisée comme suit :

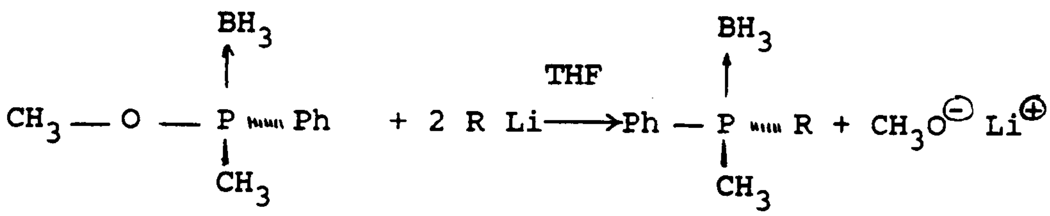


On a répété cette réaction trois fois en faisant varier le groupe R
exemple 10, R étant l'ortho-anisyle,
exemple 11, R étant l'ortho-butoxy phényle
exemple 12, R étant le n-butyle

Le mode opératoire est le même dans les trois cas. Dans 3 ml de THF sec on dissout 1 mmole de phosphinite susindiqué, puis on ajoute - sous atmosphère d'azote, à -78°C - en agitant, 2 mmoles de R Li. La réaction est suivie à la CCM (silice ; toluène/hexane). Après la disparition du phosphinite de départ, le milieu réactionnel est hydrolysé avec 0,15 ml d'eau, la température étant ramenée à 25°C. On fait évaporer le THF initial et l'on ajoute 20 ml d'eau ; le mélange est soumis à l'extraction avec trois fois 20 ml de $CH_2Cl_2$.

Après dessication des extraits ainsi obtenus, le résidu est constitué par la phosphine borane pure, produite avec des rendements de 91 à 93% dans les trois cas susindiqués.
L'analyse HPLC sur colonne "CHIRACEL OK" indique des excès énantiomériques ee de 95 à 97%.

Voici les caractéristiques des trois phosphines boranes obtenus:

Exemple :

| | 10 | 11 | 12 |
|---|---|---|---|
| Formule | 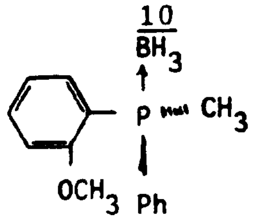 | 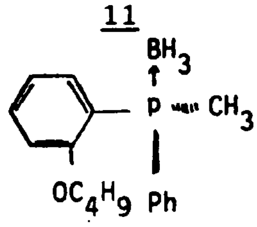 | 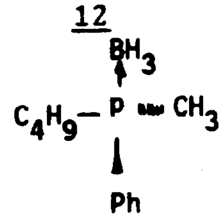 |
| | $/\alpha/^{20}_{D}$ = -25° | | $/\alpha/^{20}_{D}$ = + 9,8° |
| RMN $^{1}H$ ($CDCl_3$) | δ=0,94(3d,J=10,5)<br>δ =3,7 (3,s)<br>δ =6,85-8,2(9,m) | 0,89(3,4,J=7)<br>1,32(2,m)<br>1,59(2,m) | 0,9(3,t,J=7)<br>1,2-1,5(4,m)<br>1,5(3,d,$J_{Ph}$=10) |

Libération des phosphines de leurs complexes boranes

Dasn un ballon surmonté d'un réfrigérant on place une solution de 1 mmole de complexe borane dans 5 ml de diéthylamine, sous atmosphère d'azote. La solution est maintenue à 50°C durant 12 heures. La diéthylamine est alors évaporée et le résidu est repris avec 10 ml d'hexane ; il se forme un précipité de diéthylamine-borane que l'on élimine par filtration. La phase organique est lavée trois fois avec 10 ml d'eau. Après séchage et évaporation du solvant, la phosphine pure est obtenue avec un rendement de 91 à 94%.

Voici les caractéristiques des phosphines ainsi obtenues à partir des complexes des exemples 10 et 12.

| Exemple 10 : | Exemple 12 : |
|---|---|
| o-anisyl méthyl phényl phosphine ("PAMP") | R(+)n-butyl méthyl phényl phosphine |
| RMN $^{1}H(CDCl_3)$ | |
| δ = 1,62(3,d,J=4) | δ = 0,8(3,t,J=7) |
| δ = 3,83(3,s) | δ = 1,15(3,d,J=4 |
| δ = 6,8-7,8(9,m) | δ = 1,33(6,m) |
| cristallise à froid | consistance huileuse. |

Aucun changement de la chiralité n'accompagne le passage du complexe borane à la phosphine elle-même.

EXEMPLE 13

Application du produit de l'exemple 3 après une transformation selon l'exemple 6

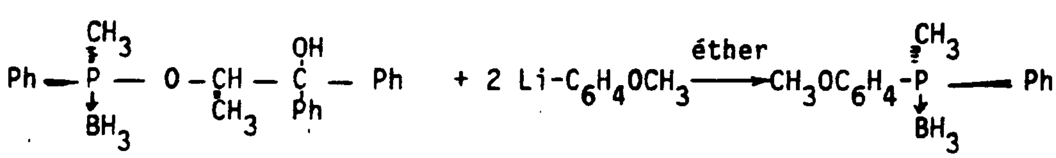

L'isomère phosphinite majoritaire A, obtenu pur dans l'exemple 6, a été mis en solution dans de l'éther. On ajoute 2 équivalents d'o-anisyle lithien à -78°C et on laisse remonter la température à 25°C. Après une nuit, le mélange est hydrolysé, extrait et purifié par chromatographie sur silice, ce qui permet d'obtenir l'o-anisylméthyl phényl phosphine borane. Ce composé a les mêmes caractéristiques que celui de l'exemple 10, mais de configuration et de pouvoir rotatoire opposés.

EXEMPLE 14

Application du complexe oxazaphospholidine borane obtenu suivant l'exemple 4

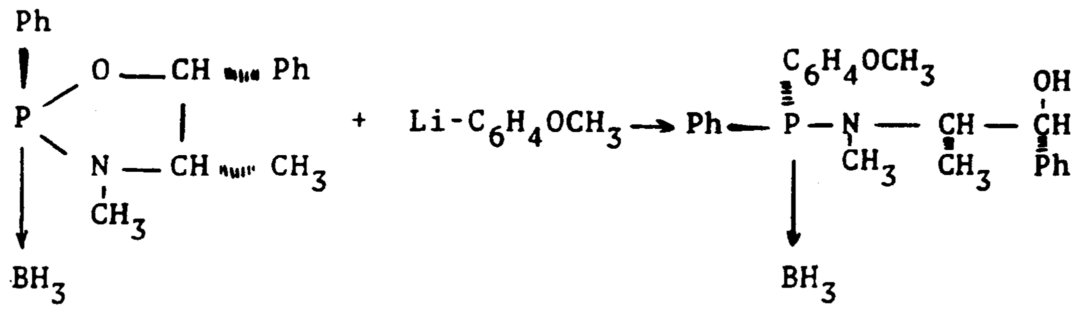


Par la technique de l'exemple 6, c'est-à-dire au moyen d'o-anisyle lithien à -78°C, puis hydrolyse, on a converti la (diméthyl-3,4 diphényl-2,5 oxazaphospholidine-1,3,2) borane (2S,4S,5R) en complexe correspondant d'aminophosphine, avec un rendement de 90%.

| | | | |
|---|---|---|---|
| H RMN ($CDCl_3$) | | $^{31}P$ RMN ($CDCl_3$) + 69,5 pm | |
| 3H(d) | 1,2 ppm | | |
| 1H(s) | 2,1 ppm | $\bar{V}$ (IR) BH | 2381 $cm^{-1}$ |
| 3H(d) | 2,5 ppm | | |
| 3H(s) | 3,55ppm | | |
| 1H(m) | 4,3 ppm | 1H(d) 4,8 ppm | 9H(m)6,8-7,7ppm |

EXEMPLE 15

Préparation du complexe borane d'o-anisylphényl phosphinite de méthyle

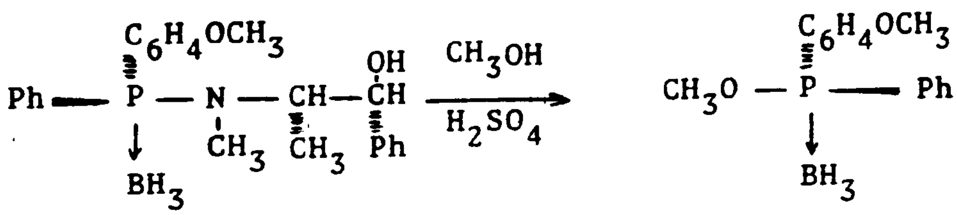


Selon un protocole opératoire identique à ce qui est décrit dans l'exemple 9, l'aminophosphine complexée de l'exemple 14 conduit, avec 95% de rendement,à l'o-anisylphényl phosphinite :

$/\alpha/_D$ = -35,6° (C=2, $CHCl_3$)

IR $\bar{\nu}_{BH}$ = 2383 $cm^{-1}$

ν P-O = 1035 cm-

C-O

$^{31}P$ RMN ($CDCl_3$) + 107 ppm $J_{PB}$ = 81 $H_2$

$^1H$ NMR ($CDCl_3$)

3H(m) 0,3 - 1,7 ppm

3H(s) 3,6 ppm

3H(d) 3,7 ppm
9H(m) 6,8 - 7,7 ppm

EXEMPLE 16

Préparation de phosphines chirales à partir du phosphinite de méthyle complexé au boranes, préparé dans l'exemple 15.

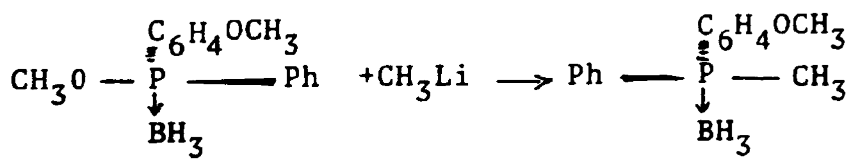

Selon un mode opératoire identique à ce qui a été décrit dans l'exemple 10, l'o-anisyl méthyl phényl phosphine borane est obtenu avec un rendement de 90% par l'action de méthyllithium sur l'o-anisyl phényl phosphinite complexe, préparé selon l'exemple 15. Dans ce cas le signe du pouvoir rotatoire et la configuration du produit obtenu sont inversés, puisque l'ordre d'addition des groupements -o-anisyle et méthyle sur le complexe de départ a été inversé.

EXEMPLE 17

Application de l'invention notamment d'une suite opératoire selon les exemples 4,6,8 et 9, à la préparation d'une nouvelle phosphines la méthyl naphtyl phényl phosphine borane.

Le méthyl phényl phosphinite de méthyle, obtenu dans l'exemple 9, est traité par du -naphtyl-lithium pour effectuer la réaction

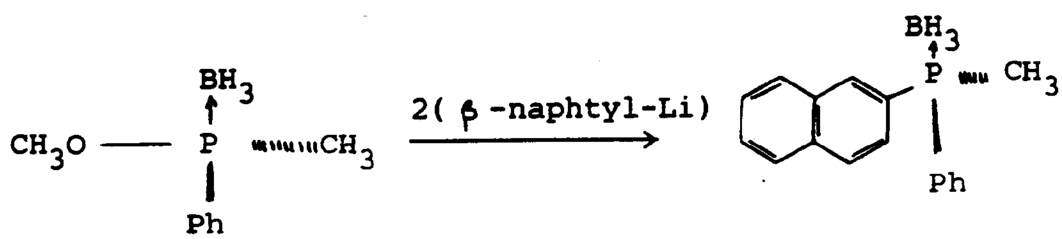


A 70 ml d'une solution de 67,6 mmoles de β-naphtyl-Li dans du THF, refroidie à 0°C, on ajoute, sous agitation, 33,7 mmoles (5,6g) de méthyl phényl phosphinate de méthyle borane dissous dans 30 ml de THF.
La température est portée à 25°C et maintenue telle durant 10 minutes, après quoi le milieu réactionnel est hydrolysé.
Le solvant THF est alors évaporé, de l'eau est ajoutée au résidu obtenu, et le mélange aqueux est soumis à l'extraction avec 3 fois 100 ml de $CH_2Cl_2$. Les phases organiques sont regroupées, lavées, séchées et évaporées, ce qui laisse un résidu de 11,5 g présentant un spectre RMN satisfaisant et qui est chromatographié sur silice (hexane 70, toluène 20, acétate d'éthyle 10 ; rf = 0,44). Le rendement ressort à 80%.

La méthyl β-naphtyl phényl phosphine borane obtenue ainsi, sous la forme d'un solide blanc, fondant à 56°-57°C après recristallisation dans un mélange éthanol-hexane, présente les caractéristiques suivantes.
IR - $\overline{V}_{CH}$ 3052 $\overline{V}$ 2368 ; 2337 1590 ; 1437 ; 1068 $cm^{-1}$
$RMN^1H$ - 0,3-1,8 ppm massif (3H)
($CDCl_3$) 1,95 ppm doublet (3H) $J_{PH}$ = 10 Hz 7,4-8,35ppm massif (12H)
$RMN^{31}P$ ($CDCl_3$) + 11,5 ppm ($J_{PB}$ = 75 Hz)
$RMN^{13}C$ doublet 12 ppm $J_{PC}$= 40 Hz multiplet 126-133 ppm

EXEMPLE 18

Application de l'invention à l'obtention d'une nouvelle diphosphine diborane : la bis(naphtyl phényl phosphino)-éthane diborane.

La préparation est effectuée à partir de la méthyl naphtyl phényl phosphine borane de l'exemple 17 par l'action d'un organo-métallique et celle du $CuCl_2$, suivie d'une hydrolyse acide :

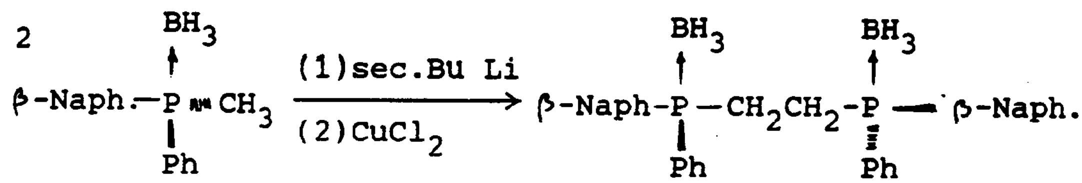


Dans un ballon de 50 ml, on mélange 58 ml de sec.butyllithium (1,37 M) avec 10 ml de solution de 2g de méthyl β-naphtyl phényl phosphine borane dans du THF, à -78°C ; après 15 minutes à cette température, le mélange est laissé sous agitation à -45°C, pendant 1 heure, après quoi on lui ajoute 1,3 g de $CuCl_2$ sec. Il est ensuite laissé à 25°C à l'air pendant une nuit, puis soumis à l'hydrolyse acide, à pH d'environ 3, et à l'extraction avec 3 fois 100 ml de $CH_2Cl_2$.

Après l'évaporation du solvant, on trouve 2,2 g de résidu que l'on purifie par chromatographie sur silice (55% d'hexane - 45% $CH_2Cl_2$ ; rf = 0,38). Le rendement est de 90% en le produit solide, blanc, fondant à 206°-207°C (recristallisé dans du toluène).

Caractéristiques de la diphosphine diborane obtenue:

$RMN^{31}P$ : + 19,33 ppm ($CDCl_3$)

$RMN^{13}C$ : 20 ppm doublet $J_{PC}$ environ 40 Hz
($CDCl_3$) 125-135ppm multiplet

$RMN^1H$ : 0,5-1,8 ppm massif (6H)
($CDCl_3$) 2 ,5 ppm " (4H)
7,1-8,8 ppm " (24H)

$[\alpha]_D^{20°} = +25°$ (C = 0,9 ; $CHCl_3$)

IR (KBr) $\overline{V}_{BH}$ 2394 ; 2348 ; 1435 ; 1084 $cm^{-1}$

EXEMPLE 19

Décomplexation de la diphosphine diborane de l'exemple 18

L'opération est effectuée suivant le principe exposé à la suite des exemples 10-12, c'est-à-dire par traitement avec une amine. Dans le cas présent, on a chauffé pendant 10 heures à 50°C une suspension de 5% diphosphine diborane dans de la diéthylamine ; par simple filtration et recristallisation à l'hexane, on a obtenu la bis (β-naphtyl phényl phosphino)éthane pure, aux caractéristiques suivantes : F = 140° - 141°C

$RMN^{31}P$ = -10,3 ppm $CDCl_3$

IR $\overline{V}$ 1585 ; 1434 ; 1078 $cm^{-1}$

$RMN^{13}C$ ($CDCl_3$) 23,8 ppm singulet
126-132 ppm multiplet

$RMN^1H$ ($CDCl_3$) m(4H) 2,2 ppm
m 7,3-8 ppm (24H)

$[\alpha]_D^{20} = -10°$ (c = 1 ; $CHCl_3$)

EXEMPLE 20

Application de l'invention à la préparation d'un dérivé hydroxylé de phosphine borane.

Sur une ortho-anisyl méthyl phényl phosphine borane, obtenue comme dans l'exemple 10, on fait agir un organométal,puis un aldéhyde ; l'hydrolyse finale conduit à l'hydroxy phosphine,selon le présent exemple :

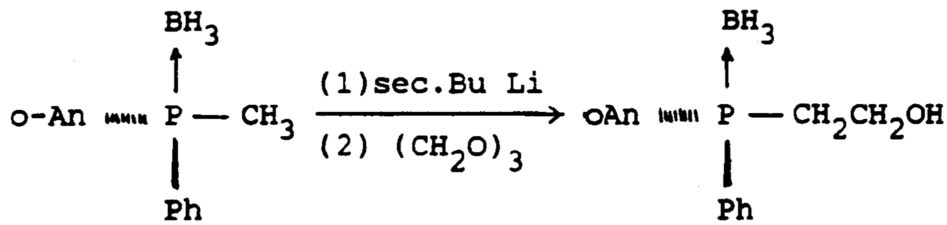


**o-anisyl phényl hydroxy-2 éthane phosphine borane**

A 4 mmoles d'ortho-anisyl méthyl phényl phosphine borane (exemple 10 ; masse molaire 244) dans 10 ml de THF, on a ajouté 3,38 ml de sec-Bu Li 1,3 M à -78°C. Après 15 minutes à cette température, puis 30 minutes à -50°C, 0,9 g de paraformaldéhyde en poudre a été ajouté et le mélange fut abandonné à la température ambiante pour 12 heures. L'hydrolyse du milieu réactionnel, suivie d'une extraction, comme dans les exemples précédents, ont conduit à 1,09 g d' anisyl phényl hydroxy-2 éthane phosphine borane brute. Elle a été purifiée par chromatographie sur silice avec un éluant à 70% de toluène et 30% d'acétate d'éthyle, rf = 0,54, en une huile légèrement colorée, obtenue avec un rendement de 86%.
IR $\bar{V}_{OH}$ 3371 $cm^{-1}$ $\bar{V}_{BH}$ 2378 $cm^{-1}$
$\bar{V}$ 1590 ; 1575 ; 1479 ; 1433 ; 1279 ; 1251 $cm^{-1}$
RMN$^1$H : 0,3-1,7 ppm massif 3H
($CDCl_3$) 1,8 ppm (m) 1H 1,5-3 ppm (m) 2H
3,6-4ppm(m) 5H 6,8-8 ppm (m) 9H
RMN$^{13}$C:27,5 ppm (d) J = 38 Hz
($CDCl_3$) 55 ppm (s) ; 57 ppm (s) 111-136 ppm (m) 161 ppm (s) ;
RMN$^{31}$P : +12 ppm ($CDCl_3$) ; $[\alpha]_D$ = 6,92° (c = 1 ; $CHCl_3$)

Ce produit nouveau, et ses homologues,sont fort utiles à la préparation de β-hydroxy phosphoniums correspondants, excellents catalyseurs par transfert de phase.

EXEMPLE 21

Obtention d'un composé possédant à la fois un groupe phosphinite et un groupe phosphine.

De tels corps peuvent être préparés par l'application de l'invention,consistant à faire réagir une seule mole d'un organo-métallique sur une de phosphinite, à la différence des exemples 10-12 où 2 moles d'organométal sont nécessaires pour 1 de phosphinite. Ainsi, dans le présent exemple, on fait réagir 1 mol de sec-Bu Li avec 1 mol de méthyl phényl phosphinite de méthyle borane (le même qu'aux exemples 10-12) ;

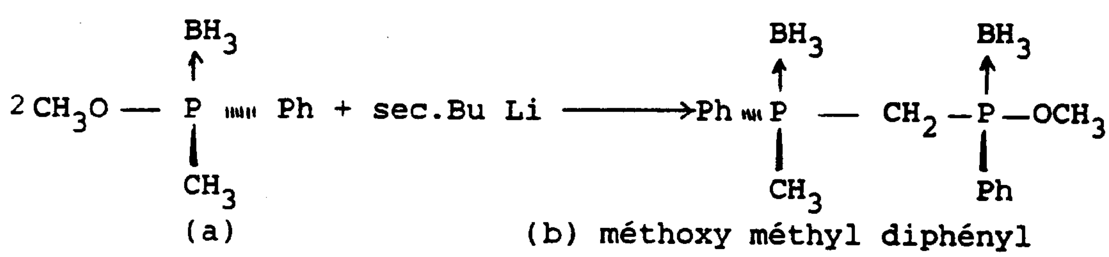


(a)

(b) méthoxy méthyl diphényl diphosphino méthane diborane

La préparation comprend l'addition de 3 ml de sec. Bu Li 1,3 M, soit 3,9 mmoles sec. Bu Li, à 0,672 g c'est-à-dire 4,02 mmoles de phosphinite (a) dissous dans 10 ml de THF ; le mélange est maintenu à -78°C durant 15 minutes, puis à -50°C pendant 30 minutes, et amené ensuite à -15°C.

On ajoute alors une nouvelle portion de 0,672g (4,02 mmoles) de phosphinite (a) et le mélange est abandonné à la température ordinaire pour 3 heures. L'hydrolyse et l'extraction, menées comme dans les autres exemples, conduisent à 1,1 g de composé (b) non cristallisé, que l'on purifie sur une colonne de silice. Le rendement en le phosphine-phosphinite borane (b) ressort à 75%.

Caractéristiques de ce nouveau produit :

IR :: $\overline{V}_{BH}$ 2385 ; $\overline{V}$ 1437 ; 1064 : 1034 $cm^{-1}$

RMN $^{31}P$ ($CDCl_3$) $\delta$ = + 113 $J_{PB}$ = 70 FHz
$\delta$ = + 8,3 $J_{PB}$ = 67 Hz

RMN $^{1}H$ : 0,2-1,6 ppm (m) 6H 1,82 ppm (d) 3H $J_{PH}$ = 10 Hz
($CDCl_3$) 2,6 ppm (m) 2H 3,6 ppm (d) 3H
7,3-7,9 ppm (m) 10H

RMN $^{13}C$ : 11,5 ppm (d) $J_{PC}$ = 39 Hz
($CDCl_3$) 30,1 ppm (dd) " = 23 Hz
54 ppm (s) 127-133 ppm (m)

EXEMPLE 22

Application de l'invention à la production de diphosphinites

Le mode opératoire est analogue à celui de l'exemple 18, mais on part d'unphosphinite au lieu d'une phosphine. On fait réagir le phosphinite d'abord avec un organométallique, puis avec du $CuCl_2$ sec, à la manière similaire à celle de l'exemple 18. Dans le cas illustratif du méthyl phényl phosphinite de méthyle borane,on a :

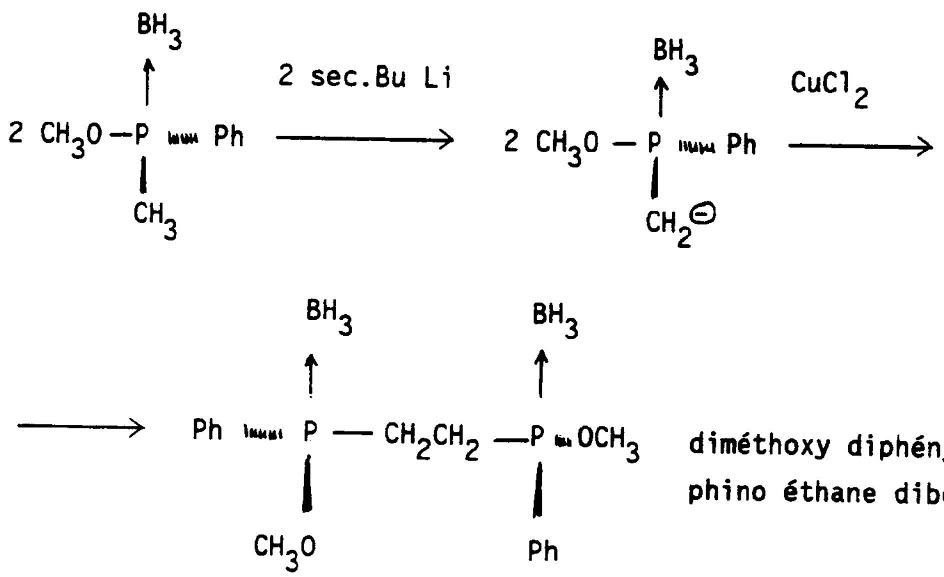


diméthoxy diphényl diphosphino éthane diborane.

Ce diphosphinite nouveau est obtenu avec un rendement de 71% sous la forme d'un solide cristallin, blanc.

| | | | | |
|---|---|---|---|---|
| Analyse = C % | calculé | 57,5 | trouvé | 57,23 |
| H % | " | 7,8 | " | 7,78 |

$[\alpha]_D$ = -115,1° (C=1 $CHCl_3$)

IR : $\overline{V}_{BH}$ 2370 ; $\overline{V}$ 1438 ; 1034 $cm^{-1}$
RMN$^1$H : 0-1,5 ppm (m) 6H ; 1,9-2,3 ppm (m) 4H
($CDCl_3$) 3,6 ppm (d) 6H, J = 12 Hz ; 7,4-7,8 ppm (m) 10H
RMN$^{31}$P : + 118,4 ppm $J_{PB}$ = 70 Hz
($CHCl_3$)

EXEMPLE 23

Application de l'Invention à la Préparation d'un Oxyde de Phosphine

L'exemple est fourni par le traitement de l'aminophosphine borane, obtenue selon l'exemple 14, d'abord par une amine, ensuite par un halogénure d'alkyle, d'aryle ou d'alkylaryle.

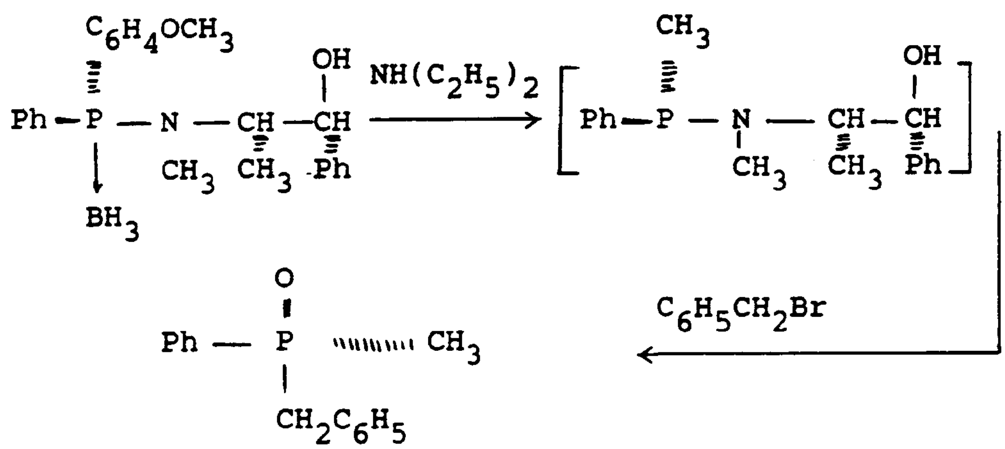


oxyde de benzyl phényl méthyl phosphine Pour cela le produit de l'exemple 14 est mis à reflux dans de la diéthylamine, pendant 10 heures à 50°C.

Après évaporation sous vide, un excès de bromure de benzyle $C_6H_5CH_2Br$ est ajouté au résidu, et le mélange est agité, à la température ambiante, pendant 48 heures. L'excès de bromure est ensuite éliminé sous vide et le résidu est chromatographié sur silice.
Un produit non cristallisé est ainsi obtenu avec un rendement de 80%.
Ce nouveau produit présente les caractéristiques suivantes:
$[\alpha]_D$ = -41° IR : $\overline{V}$ 1590 ; 1184 $cm^{-1}$

| | |
|---|---|
| RMN$^1$H ($CDCl_3$) : | 3,75 ppm (s) 3H |
| | 3,6-4 ppm(m) 2H |
| | 6,8-8 ppm(m) 10H |
| RMN$^{31}$P ($CDCl_3$) | +28,9 ppm |

EXEMPLE 24

Préparation d'halogéno-phosphines à partir d'amino phosphines obtenues suivant l'invention

L'amino phosphine borane, formée dans l'exemple 14, est traitée par de l'HCl 0,4 N, dans du toluène, comme décrit dans le mode opératoire II de l'exemple 8. On produit ainsi la réaction :

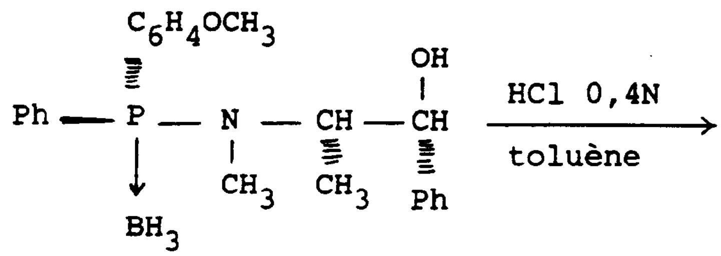


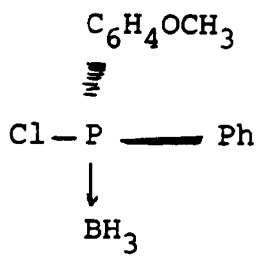

+

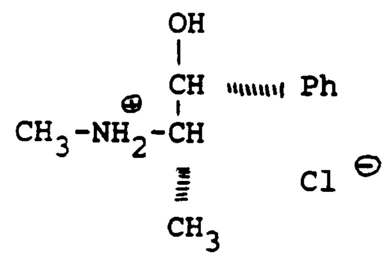

anisyl phényl chloro phosphine borane

chlorhydrate d'éphédrine

Le chlorhydrate d'éphédrine formé est séparé par filtration, et le solvant est évaporé, laissant la chlorophosphine sous la forme d'une huile épaisse, qui cristallise à froid.

Ce nouveau produit présente le RMN$^1$H ($CDCl_3$) :
0,4-1,9 ppm (m) 3H ; 3,7 ppm (s) 3H ; 6,9-7,9 ppm (m) 9H, et RMN$^{13}$C ($CDCl_3$) : 55 ppm S ; 111 ppm S ; 120-135 ppm (m).

EXEMPLE 25

Synthèse de diphosphines dont les deux P sont reliés par des cycles

A titre d'exemple, la bis(o-anisyl phényl phosphino)-2,2'-diphényl diborane est préparée à partir de la chlorophosphine de l'exemple 24.

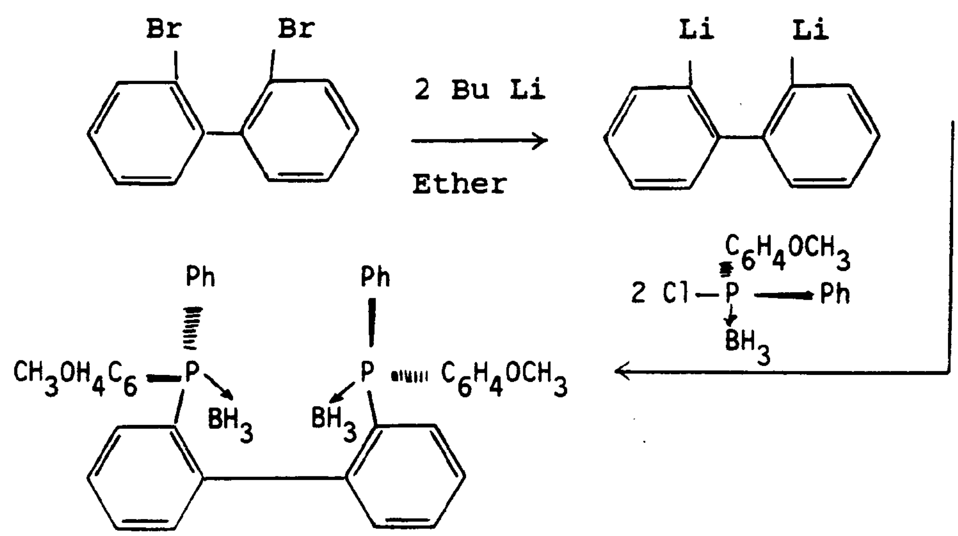


On prépare d'abord le diphényl-dilithium 2,2', en ajoutant 1 ml de Bu Li 2M à une solution de 0,312 g de

dibromo-2,2' diphényl dans 5 ml d'éther éthylique, à 0°C, en atmosphère inerte. Le mélange est agité, toujours à 0°C, durant 5 heures.

Au bout de ce temps,on lui ajoute 3 ml d'une solution de 0,5 g d'ortho-anisyl phényl chlorophosphine borane préparée selon l'exemple 24, refroidie à -78°C. La température est ensuite ramenée progressivement à l'ambiante, à laquelle la réaction se poursuit pendant 6 heures.

Après hydrolyse, extraction et purification de 0,4g obtenu par chromatographie sur silice, le nouveau composé présente le spectre IR : $\overline{V}_{BH}$=2337 ; $\overline{V}$=1590 ; 1479 ; 1279 ; 1188 $cm^{-1}$.

RMN $^{1}H$ ($CDCl_3$) 3,8 ppm (s) 6H ; 6,9-7,9 ppm (m) 26H.

RMN $^{13}C$ " 55 ppm (s) ; 112 ppm (s) ; 120 ppm (m)

RMN $^{31}P$ " 15 ppm.

EXEMPLE 26

Obtention de deux isomères selon la température de réaction ; analogue à l'exemple 6

En partant du même dioxaphospholane borane que dans l'exemple 3, et en le faisant réagir avec de l'anisyllithium, au lieu de $CH_3Li$ comme dans l'exemple 6, on obtient également deux isomères correspondants,dont un majoritaire ; la réaction a lieu à -80°C ou à -100°C.

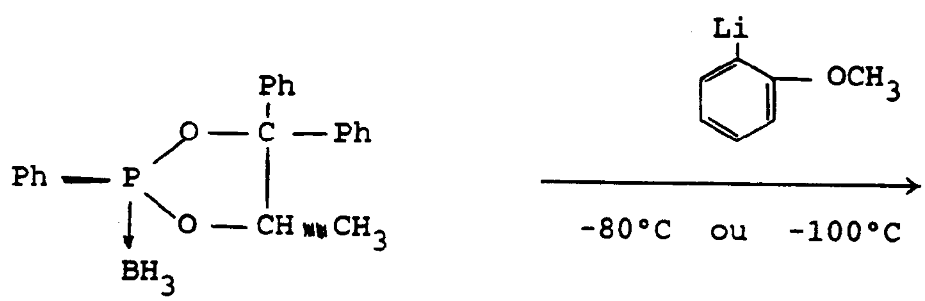


A

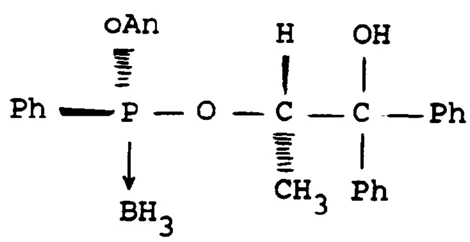

majoritaire

B

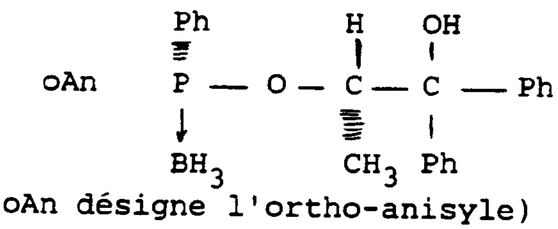 minoritaire

(oAn désigne l'ortho-anisyle)

Ces composés nouveaux présentent respectivement les caractéristiques que voici :

(A) - IR : $V_{OH}$ 3550 ; $V_{BH}$ 2480 ; 1580 ; 1105 $cm^{-1}$

RMN$^1$H : 1,1 ppm (d) 3H ; $J_{CH}$ = 10 Hz ;
3 ppm (s) 1H ; 3,5 ppm (s) 3H ; 5,7 ppm (m)
1H ; 6,7-8 ppm (m) 9H

(B) - NMR$^1$H : 1,2 ppm (c) 3H ; 3,4 ppm (s) 3H ;
5,7 ppm (m) 1H ; 6,7-8 ppm (m) 9H.

EXEMPLES COMPARATIFS

Des opérations selon exemples 8 à 26 ci-dessus, effectuées avec des produits non complexés, ont donné des résultats décevants. Dans beaucoup de cas,il n'a même pas été possible d'isoler le composé formé,ni d'en déterminer le rendement. Les milieux réactionnels évoluent en général assez rapidement, rendant le travail difficile.

Pour les opérations où l'on a réussi à évaluer le rendement, on indique cette valeur ci-après à côté de celle de l'exemple correspondant fait avec du borane.

| Ex.N° | Opération | Rendement % sans complexe % | contre | Rendement % complexé | pour ex. | n° |
|---|---|---|---|---|---|---|
| 8bis | préparation d'une chlorophosphine | 55 | " | 95 | " " | 8 |
| 9bis | préparation d'un phosphinite par alcoolyse | 53 | " | 90 | " " | 9 |
| 12bis | préparation de phosphine | 61 | " | 93 | " " | 12 |
| 14bis | ouverture du cycle | | " | 90 | " " | 14 |
| 15bis | phosphinite alcoolyse | 47 | " | 95 | " " | 15 |
| 20bis | préparation de phosphine à groupes hydroxy | 36 | " | 86 | " " | 20 |

Il est à noter que, s'il faut décomplexer une phosphine borane, cette opération peut se faire avec un rendement de 94%, comme le montre l'exemple 12 ; ainsi le rendement en phosphine décomplexée est de 93x0,94 = 87,4% donc encore beaucoup plus élevé que le maximum de 61% trouvé jusqu'à présent pour une préparation directe à partir de réactifs non complexés (exemple 12bis).

## Revendications

1. Nouveau composé organique du phosphore complexé, constitué par un hétéro-phospha-cycloalcane, pouvant être doué d'une activité optique, caractérisé par la formule

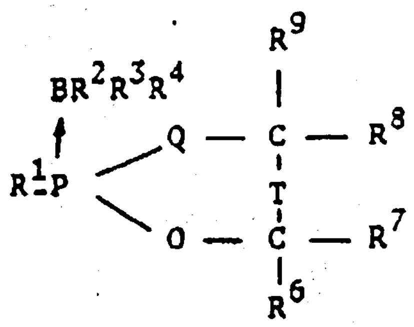

dans laquelle Q désigne un atome d'oxygène ou un groupe azoté, $-N-R^5$,où $R^5$ est un H, un alkyle $C_1$ à $C_{12}$ ou aryle $C_6$ à $C_{10}$ ; $R^1$ est un atome de H, un halogène, un groupe amino, un alkyle ou alkényle en $C_1$ à $C_{18}$, un aryle en $C_6$ à $C_{10}$ ou groupe cycloaliphatique il peut porter un second groupe phospha-cycloalcane, similaire à celui de la formule ci-dessus ; $R^2$,$R^3$ et $R^4$, semblables ou différents, sont des H, des alkyles en $C_1$ à $C_6$ ou/et des aryles en $C_6$ à $C_{10}$ ; $R^6$ à $R^9$, semblables ou différents, sont des H, des halogènes, des OH ou des radicaux aliphatiques ou aryliques; T désigne une simple liaison ou bien un alkylène en $C_1$ à $C_4$ pouvant faire partie d'un cycle arylique ou cycloaliphatique.

2. Composé suivant la revendication 1, caractérisé en ce qu'un ou plusieurs des $R^6$ à $R^9$ sont des alkyles ou alkényles en $C_1$ à $C_{12}$, des aryles éventuellement substitués, en $C_6$ à $C_{18}$, de cyclopentyles ou/et cyclohexyles.

3. Composé suivant une des revendications 1 ou 2, caractérisé en ce qu'il est constitué par un dioxaphospholane, dans lequel les $R^1$ et $R^6$ à $R^9$ sont des alkyles en $C_1$ à $C_4$ ou/et des phényles ou méthylphényles, $R^2$ à $R^4$ étant des H, tandis que T est une simple liaison ou un $-CH_2-$.

4. Composé suivant une des revendications 1 ou 2, caractérisé en ce qu'il est constitué par une oxazaphospholidine, dans laquelle les $R^1$ et $R^6$ à $R^9$ sont des alkyles en $C_1$ à $C_4$ ou/et des phényles ou méthyl-phényles, $R^2$ à $R^4$ étant des H, tandis que T set une simple liaison ou un $-CH_2$, $R^5$ étant H, alkyle en $C_1$ à $C_{12}$ ou aryle en $C_6$ à $C_{10}$.

5. Composé suivant une des revendications précédentes, caractérisé en ce que $R^1$ est un dialkyl amino à alkyles en $C_1$ à $C_3$, ou bien un monoalkyl amino en $C_1$ à $C_3$, lorsqu'il porte un second groupe phosphoré.

6. Composé suivant une des revendications 1 à 5, doué d'une activité optique, caractérisé en ce qu'il présente un excès énantiomérique (ee) d'au moins 90%.

7. Procédé pour la préparation d'un composé suivant une des revendications 1 à 6, caractérisé en ce qu'on fait réagir,au sein d'un solvant, un hétéro-phospha-cyclo-alcane avec un composé du bore $BR^2R^3R^4$, à une température de -20° à +60°C et de préférence entre 0° et +40°C.

8. Procédé suivant la revendication 7, caractérisé en ce que la concentration en l'hétéro-phospha-cyclo-alcane dans le solvant est de 0,1 à 1 M, de préférence de 0,3 à 0,7 M, la proportion de borane étant de 1 à 2 moles par mole d'hétéro-phospha-cycloalcane.

9. Procédé suivant la revendication 7 ou 8, caractérisé en ce que l'hétéro-phospha-cycloalcane borane est formé par la réaction entre une diamino-phosphine et un diol ou un amino-alcool, au sein d'un solvant qui contient 1 à 2 moles d'un borane par mole d'hétéro-phospha-cycloalcane à préparer.

10. Application d'un composé compléxé, suivant une des revendications 1 à 6 à la préparation d'un phosphinite ou/et d'une phosphine, caractérisée en ce qu'elle comprend l'action d'un composé organométallique

$R^{11}_nM$ ,où $R^{11}$ est un alkyle, alkényle, aryle ou cycloalkyle, M un métal, en particulier Na, K, Li, Ca, Mg, Zn ou Al et n la valence du métal, sur le complexe, et ensuite hydrolyse, conduisant à un complexe de phosphinite borane ou d'amino-phosphine borane :

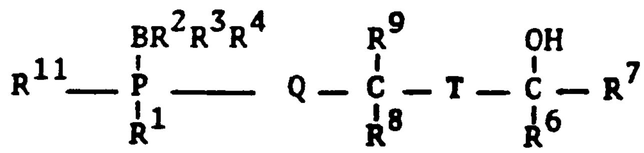

11. Application suivant la revendication 10, Q étant -N-$R^5$, caractérisée en ce que le produit formé étant soumis à l'alcoolyse acide par un alcool $R^{12}OH$, on produit le phosphinite borane

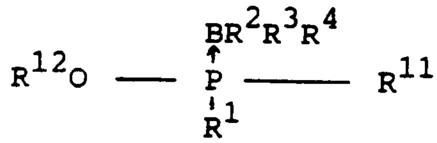

12. Application suivant la revendication 10, Q étant -N-$R^5$, caractérisée en ce que, le produit formé étant traité par un hydracide HX, on obtient une halogéno-phosphine borane

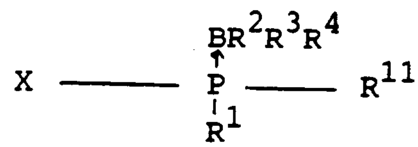

13. Application suivant les revendications 10, 11 ou 12 caractérisée en ce que, le phosphinite formé étant traité par un organométallique, on obtient une phosphine borane.

14. Application suivant la revendication 10, Q étant 0, caractérisée en ce que l'on produit un phosphinite alcalin borane, en traitant ledit phosphinite par un composé organo-métallique.

15. Application suivant une des revendications 10 à 14, caractérisée par une séquence d'opérations qui comprennent :
    (1) - préparation d'un hétéro-phospha cycloalcane par l'action d'un diol ou d'un amino-alcool sur une diamino-phosphine, en présence d'un borane ;
    (2) - ouverture du cycle de l'hétéro-phospha cycloalcane au moyen d'un composé organo-métallique;
    (3) - alcoolyse acide du produit formé par l'opération (2) ;
    (4) - recyclage dans l'opération (1) du diol ou de l'amino-alcool formé au cours de l'opération (3).

16. Application suivant la revendication 13 à la préparation d'une diphosphine borane, caractérisée en ce que 2 moles d'une phosphine borane sont mises à réagir, à basse température, avec 1 mole d'un composé organométallique et avec du $CuCl_2$.

17. Application suivant la revendication 13 à la préparation d'une phosphine borane porteuse d'un hydroxyle, caractérisée en ce qu'une phosphine borane est traitée par un composé organo-métallique et par un aldéhyde.

18. Application suivant la revendication 11, à la préparation d'une diphosphinite borane, caractérisée en ce qu'une mole de phosphinite borane est mise à réagir avec une mole d'organo-métallique et d'une mole de $CuCl_2$.

19. Application suivant les revendications 11 et 13, à la préparation d'un composé possédant à la fois une fonction phosphonite et une fonction phosphine, caractérisée en ce que l'on fait réagir 1 mole d'un phosphonite avec 1 mole d'un organo-métallique.

20. Application suivant une des revendications 10 à 19, caractérisée en ce que l'on inverse l'ordre des traitements par les composés organo-métalliques pour inverser le signe du pouvoir rotatoire et la configuration du produit à obtenir.

## Claims

1. Novel organic compound of complexed phosphorus, consisting of a hetero-phospha-cycloalkane, which may have an optical activity, characterised by the formula

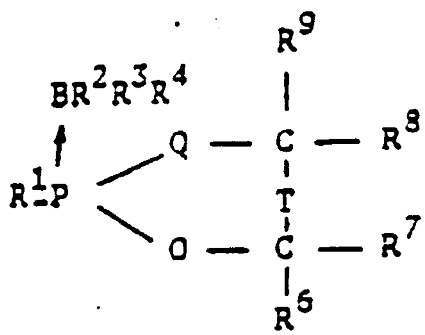

in which Q designates an oxygen atom or a nitrogen group $-N-R^5$, where $R^5$ is H, a $C_1$ to $C_{12}$ alkyl or $C_6$ to $C_{10}$ aryl; $R^1$ is a hydrogen atom, a halogen, an amino group, a $C_1$ to $C_{18}$ alkenyl or alkyl, a $C_6$ to $C_{10}$ aryl or a cycloaliphatic group; this may carry a second phospha-cycloalkane group, similar to the one in the above formula; $R^2$, $R^3$ and $R^4$, alike or different, are H, $C_1$ to $C_6$, alkyls and/or $C_6$ to $C_{10}$ aryls; $R^6$ to $R^9$, alike or different, are H, halogens, OH groups or aliphatic or aryl radicals; T designates a single bond or else a $C_1$ to $C_4$ alkylene which may form part of an aryl or cycloaliphatic ring.

2. Compound according to Claim 1, characterised in that one or more of the $R^6$ to $R^9$ groups are $C_1$ to $C_{12}$ alkenyls or alkyls, $C_6$ to $C_{18}$ cyclopentyl and/or cyclohexyl aryls, optionally substituted.

3. Compound according to one of Claims 1 or 2, characterised in that it consists of a dioxaphospholane, in which the $R^1$ and $R^6$ to $R^9$ groups are $C_1$ to $C_4$ alkyls and/or phenyls or methylphenyls, $R^2$ to $R^4$ being H, whilst T is a single bond or a $-CH_2-$.

4. Compound according to one of Claims 1 or 2, characterised in that it consists of an oxazaphospholidine, in which $R^1$ and $R^6$ to $R^9$ are $C_1$ to $C_4$ alkyls and/or phenyls or methyl-phenyls, $R^2$ to $R^4$ being H, whilst T is a single bond or a $-CH_2$, $R^5$ being H, a $C_1$ to $C_{12}$ alkyl or a $C_6$ to $C_{10}$ aryl.

5. Compound according to one of the preceding claims, characterised in that $R^1$ is a dialkyl amino with $C_1$ to $C_3$ alkyls, or else a $C_1$ to $C_3$ monoalkyl amino, when it carries a second phosphorus group.

6. Compound according to one of Claims 1 to 5, having an optical activity, characterised in that it has an enantiomeric excess (EE) of at least 90%.

7. Method for preparing a compound according to one of Claims 1 to 6, characterised in that a hetero-phospha-cycloalkane is allowed to react, in a solvent, with a boron compound $BR^2R^3R^4$ at a temperature of -20° to +60°C and preferably between 0° and +40°C.

8. Method according to Claim 7, characterised in that the hetero-phospha-cycloalkane concentration in the solvent is 0.1 to 1 M, and preferably 0.3 to 0.7 M, the proportion of borane being 1 to 2 moles per mole of hetero-phospha-cycloalkane.

9. Method according to Claim 7 or 8, characterised in that the hetero-phospha-cycloalkane borane is formed by the reaction between a diamino-phosphine and a diol or aminoalcohol, in a solvent which contains 1 to 2 moles of a borane per mole of hetero-phospha-cycloalkane to be prepared.

**10.** Application of a complexed compound according to one of Claims 1 to 6 to the preparation of a phosphinite and/or a phosphine, characterised in that it comprises the action of an organometallic compound $R^{11}{}_nM$, in which $R^{11}$ is an alkyl, alkenyl, aryl or cycloalkyl, M a metal, in particular Na, K, Li, Ca, Mg, Zn or Al and n the valency of the metal, on the complex, and then hydrolysis, leading to a complex of phosphinite borane or amino-phosphine borane:

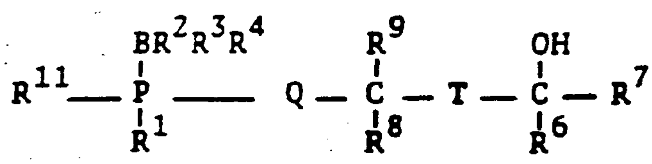

**11.** Application according to Claim 10, Q being -N-$R^5$, characterised in that, the product formed being subjected to acid alcoholisation by means of an alcohol $R^{12}OH$, the phosphinite borane

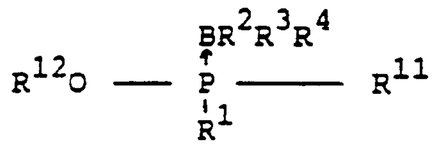

is produced.

**12.** Application according to Claim 10, Q being -N-$R^5$, characterised in that, the product formed being treated with a hydracid HX, a halogenophosphine borane

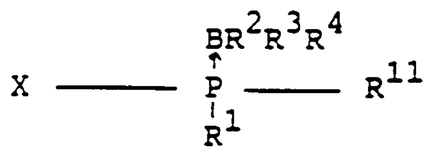

is obtained.

**13.** Application according to Claims 10, 11 or 12, characterised in that, the phosphinite formed being treated with an organometallic compound, a phosphine borane is obtained.

**14.** Application according to Claim 10, Q being 0, characterised in that an alkaline phosphinite borane is produced, by treating the said phosphinite with an organometallic compound.

**15.** Application according to one of Claims 10 to 14, characterised by a sequence of operations which comprises:

(1) - preparation of a hetero-phospha-cycloalkane by the action of a diol or an amino-alcohol on a diaminophosphine, in the presence of a borane;
(2) - opening of the ring of the hetero-phosphacycloalkane by means of an organometallic compound;
(3) - acid alcoholisation of the product formed by operation (2);
(4) - recycling in operation (1) of the diol or aminoalcohol formed during operation (3).

**16.** Application according to Claim 13 to the preparation of a diphosphine borane, characterised in that 2 moles of a phosphine borane are put to react, at low temperature, with 1 mole of an organometallic compound and with $CuCl_2$.

**17.** Application according to Claim 13 to the preparation of a phosphine borane carrying a hydroxyl, characterised in that a phosphine borane is treated with an organometallic compound and an aldehyde.

**18.** Application according to Claim 11 to the preparation of a diphosphinite borane, characterised in that 1 mole of phosphinite borane is put to react with 1 mole of an organometallic compound and 1 mole of $CuCl_2$.

19. Application according to Claims 11 and 13 to the preparation of a compound having both a phosphonite function and a phosphine function, characterised in that 1 mole of a phosphonite is allowed to react with 1 mole of an organometallic compound.

20. Application according to one of Claims 10 to 19, characterised in that the order of the treatments with the organometallic compounds is reversed so as to reverse the sign of the rotatory power and the configuration of the product to be obtained.

## Patentansprüche

1. Komplexierte organische Phosphorverbindung, bestehend aus einem Heterophosphacycloalkan, der optische Aktivität besitzen kann, gekennzeichnet durch die Formel

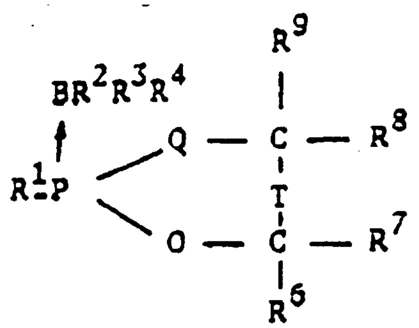

in welcher Q ein Sauerstoffatom oder eine stickstoffhaltige Gruppe -N-$R^5$ darstellt, worin $R^5$ H, ein $C_1$- bis $C_{12}$-Alkyl oder $C_6$- bis $C_{10}$-Aryl ist, $R^1$ ein H-Atom, ein Halogen, eine Amino-, eine $C_1$- bis $C_{18}$-Alkyl- oder Alkenyl-, eine $C_6$-$C_{10}$-Arylgruppe oder eine cycloaliphatische Gruppe ist, die eine zweite Phosphacycloalkangruppe tragen kann, ähnlich wie die in der obigen Formel; $R^2$, $R^3$ und $R^4$, gleich oder verschieden, sind H, $C_1$- bis $C_6$-Alkyle und/oder $C_6$- bis $C_{10}$-Aryle; $R^6$ bis $R^9$, gleich verschieden H, Halogene, OH oder aliphatische Reste oder Arylreste bedeutet, T eine Einfachbindung oder bevorzugt ein $C_1$-$C_4$-Alkylen, welches Teil eines Arylringes oder eines Cycloaliphaten sein kann, ist.

2. Verbindung nach Anspruch, dadurch gekennzeichnet, daß eines oder mehrere von $R^6$ bis $R^9$ $C_1$- bis $C_{12}$-Alkyle oder -Alkenyle, Aryle gegebenenfalls substituiert mit $C_6$ bis $C_{18}$, Cyclopentylen oder/und Cyclohexylen sind.

3. Verbindung nach einem der Ansprüche 1 oder 2, dadurch gekennzeichnet, daß sie aus einem Dioxaphospholan besteht, in welchem $R^1$ und $R^6$ bis $R^9$ $C_1$- bis $C_4$-Alkyle oder/und Phenyle oder Methylphenyle sind, wobei $R^2$ und $R^4$ H sind, wenn T eine Einfachbindung oder ein -$CH_2$- ist.

4. Verbindung nach einem der Ansprüche 1 oder 2, dadurch gekennzeichnet, daß sie aus einem Oxazaphospholidin besteht, in welchem $R^1$ und $R^6$ bis $R^9$ $C_1$- bis $C_4$-Alkyle oder/und Phenyle oder Methylphenyle sind, wobei $R^2$ und $R^4$ H sind, wenn T eine Einfachbindung oder ein -$CH_2$- ist, $R^5$ ist H, $C_1$- bis $C_{12}$-Alkyl oder $C_6$- bis $C_{10}$-Aryl.

5. Verbindung nach einem der vorangehenden Ansprüche, dadurch gekennzeichnet, daß $R^1$ ein Dialkylamino mit $C_1$- bis $C_3$-Alkylen, oder bevorzugt ein Monoalkylamino mit $C_1$- bis $C_3$-Alkyl ist, wenn es eine zweite phosphorhaltige Gruppe trägt.

6. Verbindung nach einem der Ansprüche 1 bis 5, mit optischer Aktivität, dadurch gekennzeichnet, daß diese einen Überschub an Enantiomeren (ee) von mindestens 90 % aufweist.

7. Verfahren zur Herstellung einer Verbindung nach einem der Ansprüche 1 bis 6, dadurch gekennzeichnet, daß man in Gegenwart eines Lösungsmittels ein Heterophosphacycloalkan mit einer Borverbindung $BR^2R^3R^4$ bei einer Temperatur von -20° bis +60°C und bevorzugt zwischen 0° und +40°C umsetzt.

8. Verfahren nach Anspruch 7, dadurch gekennzeichnet, daß die Konzentration des

Heterophosphacycloalkans im Lösungsmittel von 0,1 bis 1M, bevorzugt von 0,3 bis 0,7 M beträgt, wobei der Anteil des Borans von 1 bis 2 Mole pro Mol des Heterophosphacycloalkans beträgt.

9. Verfahren nach Anspruch 7 oder 8, dadurch gekennzeichnet, daß das Heterophosphacycloalkanboran gebildet wird durch die Reaktion eines Diaminophosphins und eines Diols oder Aminodiols in Gegenwart eines Lösungsmittels, das 1 bis 2 Mole eines Borans pro Mol herzustellendes Heterophosphacycloalkan enthält.

10. Verwendung einer komplexierten Verbindung nach einem der Ansprüche 1 bis 6 zur Herstellung eines Phosphinits oder/und eines Phosphins, dadurch gekennzeichnet, daß es umfaßt die Einwirkung einer metallorganischen Verbindung $R_n^{11}M$, worin $R^{11}$ ein Alkyl, Alkenyl, Aryl oder Cycloalkyl, M ein Metall, insbesondere Na, K, Li, Ca, Mg, Zn oder Al und n die Wertigkeit des Metalls ist, auf den Komplex und nachfolgende Hydrolyse, welche zu einem Phosphinitboran- oder Aminophosphinboran-Komplex führt:

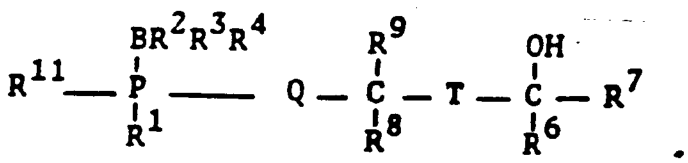

11. Verwendung nach Anspruch 10, wobei Q -N-$R^5$- ist, dadurch gekennzeichnet, daß beim Unterwerfen des gebildeten Produktes der sauren Alkoholyse mit einem Alkohol $R^{12}OH$, ein Phosphonitboran gebildet wird:

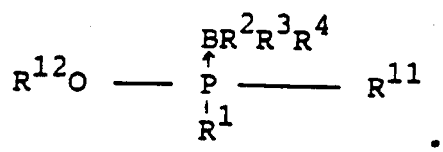

12. Verwendung nach Anspruch 10, wobei Q -N-$R^5$ ist, dadurch gekennzeichnet, daß beim Behandeln des gebildeten Produktes mit einer Wasserstoffsäure HX ein Halogenphosphinboran erhalten wird:

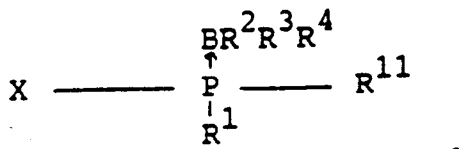

13. Verwendung nach einem der Ansprüche 10, 11 oder 12, dadurch gekennzeichnet, daß beim Behandeln des Phosphinits mit einer metallorganischen Verbindung ein Phosphinboran erhalten wird.

14. Verwendung nach Anspruch 10, wobei Q O ist, dadurch gekennzeichnet, daß beim Behandeln des Phosphinits mit einer metallorganischen Verbindung ein alkalisches Phosphinitboran gebildet wird.

15. Verwendung nach einem der Ansprüche 10 bis 14, gekennzeichnet durch einen Verfahrensablauf, welcher umfaßt:

(1) - Herstellen eines Heterophosphacycloalkans durch Umsetzung eines Diols oder eines Aminoalkohols zu einem Diaminophosphin in Gegenwart eines Borans;
(2) - Ringöffnung des Heterophosphacycloalkans mittels einer metallorganischen Verbindung;
(3) - saure Alkoholyse des in Verfahrensschritt (2) gebildeten Produktes;
(4) - Rückführung des in Verfahrensschritt (3) gebildeten Diols oder Aminoalkohols in Verfahrensschritt (1).

16. Verwendung nach Anspruch 13 zur Herstellung eines Diphosphinborans, dadurch gekennzeichnet, daß 2 Mole eines Phosphinborans bei niedriger Temperatur der Reaktion mit 1 Mol einer metallorganischen Verbindung und mit $CuCl_2$ unterzogen werden.

**17.** Verwendung nach Anspruch 13 zur Herstellung eines Phosphinborans, welches ein Hydroxyl trägt, dadurch gekennzeichnet, daß ein Phosphinboran mit einer metallorganischen Verbindung und einem Aldehyd behandelt wird.

**18.** Verwendung nach Anspruch 11 zur Herstellung eines Diphosphinitborans, dadurch gekennzeichnet, daß ein Mol eines Phosphinitborans einer Reaktion mit einem Mol einer metallorganichen Verbindung und einem Mol $CuCl_2$ unterzogen wird.

**19.** Verwendung nach den Ansprüchen 11 bis 13 zur Herstellung einer Verbindung, die gleichzeitig eine Phosphinitfunktion und eine Phosphinfunktion besitzt, dadurch gekennzeichnet, daß man 1 Mol eines Phosphonits mit 1 Mol einer metallorganischen Verbindung reagieren läßt.

**20.** Verwendung nach einem der Ansprüche 10 bis 19, dadurch gekennzeichnet, daß man die Reihenfolge der Behandlungen durch die metallorganischen Verbindungen umkehrt, um das Vorzeichen des Drehvermögens und die Konfiguration des zu erhaltenden Produktes umzukehren.